(19) Europäisches Patentamt
European Patent Office
Office européen des brevets

(11) **EP 2 688 183 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(51) Int Cl.:
*H02K 3/18* *(2006.01)*      *H02K 15/04* *(2006.01)*

(21) Anmeldenummer: **13174808.9**

(22) Anmeldetag: **02.07.2013**

(54) **Gießtechnisch hergestellte elektrische Spule**

Cast electric coil

Bobine électrique fabriquée selon une technique de coulage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2012 DE 102012212637**

(43) Veröffentlichungstag der Anmeldung:
**22.01.2014 Patentblatt 2014/04**

(73) Patentinhaber: **Fraunhofer-Gesellschaft zur Förderung der angewandten Forschung e.V.
80686 München (DE)**

(72) Erfinder:
 • **Wöstmann, Franz-Josef**
  **28359 Bremen (DE)**
 • **Gröninger, Michael**
  **28359 Bremen (DE)**
 • **Kock, Alexander**
  **49082 Osnabrück (DE)**
 • **Pleteit, Hermann, Dr.**
  **28359 Bremen (DE)**
 • **Horch, Felix**
  **28209 Bremen (DE)**
 • **Schmidt, Daniela**
  **28203 Bremen (DE)**

(74) Vertreter: **Eisenführ Speiser
Patentanwälte Rechtsanwälte PartGmbB
Postfach 10 60 78
28060 Bremen (DE)**

(56) Entgegenhaltungen:
**EP-A2- 0 891 030      EP-A2- 2 387 135
DE-A1- 2 905 996      DE-A1- 4 122 076
JP-A- 2006 026 681      JP-A- 2006 166 610
US-A- 3 629 629**

 • **GRONINGER M ET AL: "Casting production of coils for electrical machines", ELECTRIC DRIVES PRODUCTION CONFERENCE (EDPC), 2011 1ST INTERNATIONAL, IEEE, 28. September 2011 (2011-09-28), Seiten 159-161, XP032000385, DOI: 10.1109/EDPC.2011.6085534 ISBN: 978-1-4577-1371-2**
 • **Der Idee ET AL: "Fraunhofer IFAM Forschung und Entwicklung aus einer Hand", , 31. Dezember 2011 (2011-12-31), XP055363839, Gefunden im Internet: URL:http://alumag.com/wp-content/uploads/2013/11/RSAL10.2011FraunhoferLecture.pdf [gefunden am 2017-04-11]**

**Beschreibung**

Die vorliegende Erfindung betrifft eine Spule für eine elektrische Einrichtung, insbesondere eine elektrische Maschine. Weiterhin betrifft die vorliegende Erfindung eine Spulenanordnung für eine elektrische Maschine mit wenigstens einer ersten und einer zweiten Spule. Weiterhin betrifft die vorliegende Erfindung eine elektrische Maschine, insbesondere einen Rotationsmotor und/oder einen Rotationsgenerator mit wenigstens einer Spule. Die Erfindung betrifft weiterhin ein Verfahren zum Herstellen wenigstens einer Spule.

Elektrische Spulen, die im Weiteren nur als Spulen bezeichnet werden, sind allgemein bekannt. Eine solche Spule weist wenigstens eine, meist viele um wenigstens einen ein magnetisches Feld führenden Kern anzuordnende Windungen auf. Diese Windungen sind aus einem elektrisch leitfähigen Material, insbesondere Metall, um einen elektrischen Strom zu führen. Ein solcher, in den Windungen geführter elektrischer Strom, führt zu einer Wechselwirkung mit einem Magnetfeld in dem Kern, um den herum die Windungen angeordnet sind.

Eine klassische Spule wird aus einem Kupferdraht gewickelt. Der Kupferdraht weist dabei in der Regel einen kreisförmigen oder rechteckigen Querschnitt auf. Die Drähte der Windungen liegen benachbart zueinander in einem Wickelraum, den sie ausfüllen bzw. ausfüllen sollten. Aufgrund des meist kreisförmigen Querschnitts des Drahtes und damit jeder Windung bleiben zwischen diesen aneinander liegenden Windungen Zwischenräume. Dadurch ergibt sich für den Wickelraum ein ungünstiger Füllfaktor, nämlich das Verhältnis der effektiven Querschnittsfläche der Kupferleiter zur theoretisch maximalen Querschnittsfläche des Wickelraums, der in diesem Zusammenhang auch als Wickelfenster bezeichnet werden kann. Bei Runddraht wird der Füllfaktor rein rechnerisch auf ein theoretisches Maximum von ca. 78% begrenzt und ist somit in der Realität, z.B. durch Randeffekte oder das gewählte Fertigungsverfahren, noch kleiner. Bspw. wird beim Nadelwickeln der Nutfüllfaktor zusätzlich noch durch den Raum zur Durchführung der Nadel eingeschränkt. Ähnliches gilt bei der Verwendung von rechteckigen Querschnitten, wobei hier der Füllfaktor gegenüber Runddrähten noch etwas gesteigert werden kann, aber die Verarbeitung erheblich erschwert wird.

Um diesem Problem zu begegnen, können die Spulen gießtechnisch hergestellt werden. Hierdurch ist zumindest theoretisch jede Querschnittsform in den Windungen möglich und damit ein Füllfaktor von bis zu 100% zumindest theoretisch erreichbar. Eine gießtechnische Herstellung von Spulen ist bspw. aus M. Gröninger, A. Kock et al. "Casting production of coils for electrical machines" in Electric Drives Production Conference (EDPC), 2011 First International IEEE, 2011, Seiten 159-161, bekannt. In der deutschen Patentanmeldung DE 10 2010 020 897 A1 ist ebenfalls eine gießtechnische Herstellung von Spulen beschrieben. Eine solche erlaubt die Variation der Geometrie des Leiterquerschnitts über die Leiterlänge. Damit kann nicht nur der ungünstige Füllfaktor für Runddrähte verbessert werden, sondern der Leiter kann seinen Querschnitt auch in Längsrichtung verändern und damit können in dem Wickelraum benachbarte Windungen unterschiedliche Querschnitte aufweisen. Damit kann grundsätzlich eine optimale Anpassung der Leiter an die Geometrie des Wickelraumes vorgenommen werden.

Als weiteres Problem ergibt sich, dass örtlich unterschiedliche Kühlbedingungen innerhalb der Spule vorhanden sind und sich hierdurch Wärmezentren bilden, in denen die maximale Betriebstemperatur der Spule früher erreicht wird als außerhalb dieser Wärmezentren. Dieses Problem wurde bspw. in A. Boglietti, "Evolution and Modern Approaches for Thermal Analyses of Electrical Machines", IEEE Transactions on Industrial Electronics, 2009 beschrieben. Dies ist bspw. bei denjenigen Leitern der Fall, die weit von einem Kühlmantel entfernt liegen. Dies gilt insbesondere für am Wicklungskopf und zu einem Luftspalt hin liegende Leiter. Dies tritt insbesondere bei wassermantelgekühlten Maschinen auf, um hier ein Anwendungsbeispiel zu nennen. Da die Isolation der Leiter in der Regel auf eine maximale Temperatur ausgelegt wird, ergibt sich hierdurch nach dem Stand der Technik eine nicht optimale Ausnutzung des Leitermaterials.

Bei gießtechnisch hergestellten Spulen für bspw. Rotationsmaschinen können die gießtechnischen Windungen an die Rotationsmaschine angepasste gebogene Formen aufweisen. Eine solche gebogene Form kann z.B. zu Querschnittsformen von Windungen führen, die einem Segment eines Zylindermantels entsprechen. Problematisch für solche Formen ist, dass sie schwierig aus einer Gießform zu lösen sind, weil in einer solchen Gießform Hinterschneidungen entstehen. Dabei erfolgt bspw. bei einem Feingussverfahren eine Herstellung so, dass ein Modell der Spule durch eine Modellform hergestellt wird. Mit diesem Modell wird dann die eigentliche Gussform hergestellt, wobei das Modell zerstört wird, somit verloren ist, und für jede Gussform, und damit jeden Guss neu hergestellt werden muss. Zum Herstellen des Modells muss dieses aus der Modellform entnommen werden. Liegen nun Hinterschneidungen vor, ist es auch schwierig, dieses Modell zu entnehmen. Bei Verwendung einer Dauerform, wie bspw. beim Kokillengießverfahren, ist es schwierig, die gegossene Spule aus der Form zu entnehmen.

Ein weiteres Problem ergibt sich insbesondere bei der Verwendung gegossener Spulen in der Verwendung von rotierenden Maschinen des Typs eines so genannten Innenläufers. Bei einer solchen Maschine dreht sich der Rotor oder Läufer innerhalb des Stators. Der Stator weist hierzu Zähne oder Kerne auf, die zum Rotor und damit nach innen weisen. In diese Richtung weisen auch die Öffnungen von Nuten zwischen diesen Zähnen. In diese Nuten sind die Windungen einzubringen. Aufgrund der konzentrischen Ausbildung der Maschine und damit auch des Stators einschließlich seiner Nuten, sind die Nuten im Bereich ihrer Öffnungen am schmalsten. Vorgefertigte, insbesondere gießtechnisch hergestellte Spulen, die möglichst so an die Nuten angepasst sind, dass sie darin einen Füllfaktor von 100% erreichen können, sind daher schwierig durch die Öffnungen der Nuten einzubringen, weil dies die schmalste Stelle der Nuten ist und die Geometrie der Spule aufgrund der Vorfertigung bereits besteht.

Bei gießtechnisch hergestellten Spulen werden oftmals Windungen mit vergleichsweise großen Querschnitten verwendet. Diese haben insbesondere bei der Verwendung in Wechselstromanwendungen, wenn also ein regelmäßig änderndes Magnetfeld auftritt, das Problem, dass Wirbelströme aufgrund der großen Querschnittsfläche verstärkt auftreten können. Hierdurch können unerwünschte oder unerwünscht hohe Wirbelstromverluste entstehen. Mitunter können, insbesondere bei Anwendungen mit hoher Frequenz auch noch Stromverdrängungseffekte auftreten, die umso höher sein können, je größer die Querschnittsfläche der betroffenen Windung ist. Dieses Problem ist bspw. beschrieben in G. Müller und B. Ponick "Elektrische Maschinen, 2: Berechnung elektrischer Maschinen", S. 385 ff., 6. Auflage, Wiley-VCH Verlag GmbH & Co. KGaA, 2009.

Je nach konkreter Größe und Ausgestaltung einer gießtechnisch hergestellten Spule kann diese mechanische Stabilitätsprobleme aufweisen, zumal zur Optimierung des Füllfaktors kein Wickelkörper verwendet wird und im Übrigen auch aufgrund der gießtechnischen Herstellung nicht benötigt und nicht erwünscht ist. Insbesondere vor dem Einsetzen einer solchen gießtechnisch hergestellten Spule kann diese Stabilitätsprobleme aufweisen oder zumindest eine erhöhte Sorgfalt bei der Handhabung erforderlich machen. Die Stabilitätsprobleme können ggf. auch bei der Form auftreten. Insbesondere ist bei einer angestrebten Verwendung von Dauerformen eine gewisse Stabilität wünschenswert.

Das deutsche Patent- und Markenamt hat in der Prioritätsanmeldung folgenden Stand der Technik recherchiert: PILLE, Christoph, HORCH, Felix: Von der Idee zum gießtechnisch umgesetzten Produkt in Fraunhofer IFAM. Bremen: Leichtbau-Roadshow 2011 (Präsentationsfolien), Seiten 1, 19-27, 33, - Firmenschrift; DE 103 52 814 A1; DE 10 2010 020 897 A1; GRÖNINGER, M: Casting production of coils for electrical machines: in: Electric Drives Production Conference (EDPC), 2011 (First International IEEE), Seiten 159-161; DE 41 22 076 A1 und DE 10 2004 024 392 A1. Dokument XP032000385 offenbart eine Spule für eine elektrische Einrichtung gemäß dem Oberbegriff von Anspruch 1.

Der vorliegenden Erfindung liegt somit die Aufgabe zugrunde, zumindest eines der oben genannten Probleme zu adressieren. Insbesondere soll eine Lösung vorgeschlagen werden, die eine thermische Ungleichverteilung in einer Spule adressiert. Außerdem oder alternativ soll eine Lösung vorgeschlagen werden, bei der eine Herstellung einer Spule insbesondere im Hinblick auf Hinterschneidungen zwischen Spule und Gießform vereinfacht wird. Zudem oder alternativ soll eine Lösung vorgeschlagen werden, bei der Probleme von Spulen für elektrische Maschinen vom Typ Innenläufer adressiert werden. Insbesondere soll eine Nut berücksichtigt werden, die an ihrer Öffnung zum Einsetzen einer Spule enger ist als in dem Raum, in den die Spule eingesetzt werden soll. Zusätzlich oder alternativ soll eine Lösung vorgeschlagen werden, die Wirbelstromeffekte und/oder Stromverdrängungseffekte möglichst verringert oder sogar behebt. Es soll auch eine Lösung vorgeschlagen werden, die außerdem oder alternativ dazu geeignet ist, die Stabilität von gießtechnisch hergestellten Spulen und/oder von Formen für gießtechnisch herzustellende Spulen zu erhöhen. Zumindest soll eine alternative Ausführungsform geschaffen werden.

Erfindungsgemäß wird eine Spule nach Anspruch 1 vorgeschlagen. Eine solche Spule ist für eine elektrische Einrichtung, insbesondere eine elektrische Maschine zum Anordnen um wenigstens einen ein magnetisches Feld führenden ersten Kern vorbereitet. Die Spule weist eine in Richtung des magnetischen Feldes, das in dem Kern geführt werden soll, verlaufende Spulenlängsachse auf. Die Spule weist mehrere, aus einem elektrisch leitfähigen Material gegossene Windungen auf und die Windungen und/oder Windungsabschnitte weisen abhängig ihrer Position in Spulenlängsrichtung Querschnittsflächen unterschiedlicher Größe und/oder unterschiedlicher Formen auf.

Die elektrische Maschine kann ein rotierender elektrischer Generator und/oder Motor sein. Es kommen auch bspw. linear arbeitende Maschinen, wie bspw. ein Linearmotor in Betracht. Grundsätzlich kann die Spule auch für eine elektrische Einrichtung, wie eine Drossel oder einen Transformator, vorgesehen sein, um weitere Beispiele einer elektrischen Einrichtung zu nennen.

Der wenigstens eine Kern, um den die Spule anzuordnen ist, weist vorzugsweise ein magnetisch leitendes Material auf und kann auch als Magnetkern bezeichnet werden. Bspw. ist der Kern ein Zahn eines Statorblechpakets und eine Anordnung der Spule um diesen Zahn führt dazu, dass Abschnitte der Spule in Nuten zwischen diesem Zahn und benachbarten Zähnen des Statorblechpakets liegen, um ein Beispiel zur Erläuterung zu nennen.

Die Spule weist mehrere aus einem elektrisch leitfähigen Spulenmaterial gegossene Windungen auf und ist damit eine gießtechnisch hergestellte Spule. Als elektrisch leitfähiges Material wird insbesondere Metall vorgeschlagen, dass zum Vergießen auf entsprechende Temperatur erhitzt wird und nach dem Gießen zu der gewünschten Spulenform erstarrt.

Es wird vorgeschlagen, dass die Windungen abhängig ihrer Position in Spulenlängsrichtung Querschnittsflächen unterschiedlicher Größe und/oder Querschnittsflächen unterschiedlicher Formen aufweisen. Eine Windung ist hier eine Umrundung des das magnetische Feld führenden Kerns. Es liegt natürlich auch dann eine Windung vor, wenn der Kern nicht oder noch nicht vorhanden ist. Jede Windung ist somit dazu vorbereitet, elektrischen Strom entsprechend um den Kern oder vorgesehenen Kern zu führen. Diese Richtung, in die der Strom fließen soll, ist somit auch im Wesentlichen die Längsrichtung der Windung in dem jeweiligen Abschnitt. Die Spule ist somit die Gesamtheit aller Windungen. Es wurde nun erkannt, dass jede einzelne Windung einen individuellen Querschnitt erhalten kann, wobei Querschnittsflächen in Größe und/oder Form für jede Windung individuell vorgesehen sein können. Als Querschnittsflächen werden hier Flächen bei einem Schnitt durch die jeweiligen Windungen quer zur Längsrichtung der jeweiligen Windung betrachtet. Diese Querschnittsflächen können für jede oder zumindest einige Windungen, aber auch für jede oder wenigstens einige Windungsabschnitte, unterschiedlich gewählt werden, nämlich hinsichtlich Größe, also Flächeninhalt und/oder hinsichtlich Form.

Eine unterschiedliche Form kann bspw. eine Dreiecksform statt einer Trapezform, oder rechteckige Form statt einer nicht-rechteckigen Trapezform sein. Auch können hierunter bspw. Rechteckformen mit unterschiedlichen Seitenverhältnissen fallen. Durch diese unterschiedlichen Formen kann jede Windung abhängig ihrer Position in Spulenlängsrichtung eine angepasste Form aufweisen. Die Querschnittsfläche kann hierbei ebenfalls variieren oder auch gleich bleiben.

Erfindungsgemäß wurde somit erkannt, dass unter Berücksichtigung der verfahrenstechnischen Grenzen, insbesondere der gießtechnischen Grenzen, Leiterform und/oder Flächeninhalt bspw. aus thermischen oder elektrischen Gründen gezielt angepasst werden können, was bei der Verwendung von Draht oder Formstäben nicht oder nicht ohne Weiteres möglich ist. Ein solcher Freiheitsgrad ergibt sich somit durch das gießtechnische Herstellungsverfahren und es wird vorgeschlagen, diesen Freiheitsgrad für verschiedene grundlegende funktionelle Verbesserungen an Spulen für elektrische Maschinen auszunutzen.

So wurde auch erkannt, dass thermische Ungleichverteilungen im Wickelraum, insbesondere in Spulenlängsrichtung, durch eine gezielte Vergrößerung der Querschnittsfläche der Windungen im Bereich von Wärmezentren eine lokale Verringerung des elektrischen Widerstands und damit auch der Verlustleistungsdichte erreicht werden kann. Im Gegensatz zu einem gewickelten Draht, sei er nun im Querschnitt rund oder anderweitig ausgebildet, kann durch die gießtechnisch hergestellte Spule der Querschnitt zwischen unterschiedlichen Windungen variiert werden, auch in der Größe. Dort, wo eine schlechte Wärmeabführ oder sogar ein Wärmeeintrag erwartet wird, wird ein möglichst großer Querschnitt vorgeschlagen, um dort geringere ohmsche Verluste und damit entsprechend geringe Wärmeerzeugung durch den elektrischen Strom zu haben. Hierdurch kann ein Ausgleich geschaffen werden. Dort, wo mit geringeren Temperaturen, also mit einer besseren Kühlung und/oder geringerem anderen Wärmeeintrag zu rechnen ist, kann ein kleinerer Querschnitt der betreffenden Windungen ausreichen. Durch das Vorsehen eines vergleichsweise geringen Querschnitts in solchen Bereichen, verbleibt für die thermisch problematischen Bereiche mehr Wickelraum, so dass der Querschnitt der Windung oder Windungen dort erhöht werden kann.

Vorzugsweise ist die Spule zur Verwendung in der elektrischen Einrichtung, insbesondere in der elektrischen Maschine, vorbereitet. Insbesondere ist sie an die Bauform einer Maschine, insbesondere den Kern und entsprechende Nuten, angepasst und hinsichtlich ihrer elektrischen Eigenschaften, wie der Auslegung für den in der Maschine vorgesehenen Strom, für den Einsatz in der Maschine ausgelegt.

Die Spule weist wenigstens eine erste und eine zweite Stirnseite auf, wobei die Spulenlängsrichtung im Wesentlichen zwischen der ersten und zweiten Stirnseite verläuft. Die Spule in Längsrichtung ist somit von der ersten zur zweiten Stirnseite gerichtet bzw. umgekehrt. Außerdem weist die Spule zwei, jeweils zwischen dem ersten Kern und einem weiteren Kern anzuordnende Schenkel auf, mit einer zum ersten Kern weisenden Innenfläche und einer zum jeweils weiteren Kern weisenden Außenfläche. In einer Schnittdarstellung ist ein Schenkel der Spule somit im Wesentlichen umrissen durch die beiden Stirnseiten, zwischen denen sich der Schenkel in Längsrichtung des Kerns erstreckt, und einer Innen- und einer Außenfläche, zwischen denen sich der Schenkel im Wesentlichen quer zur Längsrichtung des Kerns erstreckt. Die Innenfläche weist dabei zum Kern und die Außenseite im Wesentlichen zur entgegengesetzten Seite der Spule. Die erste Stirnfläche weist insbesondere zu einer Nutöffnung der Nut, in der die Spule bestimmungsgemäß eingesetzt ist, und die zweite Stirnfläche weist im Wesentlichen zu einem Nutgrund, wie einem Träger, der den Kern und weitere Kerne mechanisch und magnetisch verbindet, wie bspw. ein Statorblechpaket, das mehrere Zähne aufweist, die jeweils einen Kern bilden.

Durch diese vier Seiten wird der Schenkel einer Spule im Wesentlichen bestimmt, wobei die Seiten nicht gerade oder flach ausgebildet sein müssen und grundsätzlich auch weitere, kleinere Seiten vorhanden sein können.

Vorzugsweise ist die elektrische Einrichtung eine eine Drehachse aufweisende Rotationsmaschine, also ein eine Drehachse aufweisender elektrischer Motor und/oder elektrischer Generator und/oder eine elektrische Maschine, die sowohl als Generator als auch als Motor betrieben werden kann.

Hierbei verläuft die Spulenlängsrichtung bestimmungsgemäß in radialer Richtung zur Drehachse. Die Spulenlängsachse verläuft somit in Richtung von der Drehachse radial nach außen oder umgekehrt. Insbesondere sind in einer solchen Rotationsmaschine mehrere Kerne, insbesondere mehrere Pole vorgesehen, die zum Tragen mehrerer Spulen in Umfangsrichtung um die Drehachse herum verteilt sind und wobei sich bestimmungsgemäß die Spulenlängsrichtungen dieser mehreren Spulen sternförmig von der Drehachse nach außen erstrecken oder umgekehrt. Außerdem ist ein Luftspalt zwischen stehendem und drehendem Teil der Rotationsmaschine ausgebildet, insbesondere zwischen Stator und Rotor bzw. Stator und Läufer.

Die erste Stirnseite der Spule bzw. eines Schenkels der Spule ist zum Anordnen zum Luftspalt hin vorbereitet, und die zweite Stirnseite ist zum Anordnen zu einer Seite hin vorbereitet, die zum Luftspalt abgewandt ist.

Vorzugsweise nimmt die Querschnittsfläche der Windungen der Spule von der zweiten Stirnseite zur ersten Stirnseite hin zu. Hierdurch kann eine thermische Eigenschaft einer solchen Rotationsmaschine berücksichtigt werden, bei der im Bereich des Luftspalts schlechter gekühlt werden kann als an einer dem Luftspalt abgewandten Seite. Entsprechend wird zum Luftspalt hin zur Kompensation oder teilweisen Kompensation dieses thermischen Effekts ein größerer Querschnitt der Windung vorgeschlagen, wohingegen zur zweiten Stirnseite hin ein geringerer Querschnitt ausreichen kann. Eine solche Lösung wird auch vorgeschlagen für eine nicht rotierende Maschine wie ein Linearmotor, die aber auch einen Luftspalt zwischen einem stehenden und einem bewegten Teil der Maschine aufweist. Auch hier kann das Vorsehen eines größeren Querschnitts in der Nähe des Luftspalts zur Kompensation höherer Temperaturen dort vorgeschlagen werden.

Gemäß einer Ausführungsform wird vorgeschlagen, dass bei bestimmungsgemäßer Anordnung der Spule in der elektrischen Einrichtung die erste Stirnseite zum Anordnen in einem ersten Bereich der elektrischen Einrichtung vorgesehen ist und die zweite Stirnseite zum Anordnen in einem zweiten Bereich der elektrischen Einrichtung vorgesehen ist und der zweite Bereich stärker gekühlt wird als der erste Bereich und/oder die Spule im Bereich ihrer zweiten Stirnseite stärker gekühlt wird als im Bereich ihrer ersten Stirnseite.

Die Spule ist somit hinsichtlich ihrer Windungsquerschnitte, nämlich der Größe der Querschnittsflächen, an die thermischen Gegebenheiten in der elektrischen Einrichtung, insbesondere elektrischen Maschine, angepasst. Diese Lösung berücksichtigt insbesondere elektrische Einrichtungen, bei denen die im Betrieb zu erwartende Temperatur von dem ersten Bereich zum zweiten Bereich hin abnimmt.

Vorzugsweise wird vorgeschlagen, dass die Querschnitte der Windungen je größer sind, desto höher die Temperatur im Bereich der betreffenden Windung zu erwarten ist. Bspw. kann hierfür bei einer bekannten Maschine mit herkömmlicher Spule eine Untersuchung mittels Simulation oder sogar mittels Messungen vorgenommen werden.

Gemäß einer Ausführungsform wird vorgeschlagen, dass die Spule dadurch gekennzeichnet ist, dass wenigstens eine Windung im Bereich wenigstens eines Wicklungskopfes einen anderen, insbesondere größeren Querschnitt aufweist, als im Bereich der Schenkel. Ein Wicklungskopf ist hierbei der Übergangsbereich von einem Schenkel zum anderen Schenkel. Der Begriff leitet sich von einer gewickelten Spule ab und betrifft somit den Bereich, in dem Wicklungsbündel beim Führen von einer Wickelnut in eine andere Wickelnut meist nach außen hin erkennbar werden. Dieser Begriff des Wicklungskopfes findet aber auch bei gießtechnisch hergestellten Spulen für eben diesen Übergangsbereich von einem zum nächsten Schenkel und damit von einer zur nächsten Nut Anwendung. Im Bereich dieses Wicklungskopfes kann häufig eine schlechtere Kühlung für die Wicklung bzw. die Windungen und damit für die Spule vorliegen. Das ist häufig dadurch begründet, dass ein Wicklungskopf vergleichsweise wenig Kontakt zu einem thermisch leitfähigen Abschnitt der eingesetzten Maschine oder ähnlichem hat. Durch die Verwendung eines anderen Querschnitts kann sich die Windung im Bereich des Wicklungskopfes an die Situation anpassen. Insbesondere ist ein größerer Querschnitt, nämlich eine größere Querschnittsfläche ein vorgeschlagener Lösungsansatz. Hierdurch kann die Stromdichte der betreffenden Windung im Bereich des Wicklungskopfes durch den höheren Querschnitt verringert werden. Somit treten in diesem Bereich zumindest weniger thermische Verluste auf und der Wicklungskopf heizt sich somit im Betrieb hier weniger auf.

Vorzugsweise unterscheiden sich wenigstens zwei benachbarte Windungen im Bereich des Wicklungskopfes in ihrer Geometrie, insbesondere in ihrem Querschnitt so, dass die Spule im Bereich dieses Wicklungskopfes an einer dem Kern abgewandten Seite einen Vorsprung ausbilden. Die Geometrie dieser beiden benachbarten Windungen wird somit nicht nur im Hinblick auf das Leiten des Stromes ausgebildet, sondern es wird auch die resultierende Gesamtgeometrie des Wicklungskopfes berücksichtigt. Durch eine Ausbildung, bei der sich ein Vorsprung des Wicklungskopfes an der dem Kern abgewandten Seite, also nach außen ergibt, wird bewusst diese Außenseite des Wicklungskopfes beeinflusst, nämlich so, dass sich ihre Außenfläche an dieser Außenseite erhöht. Entsprechend kann hier eine erhöhte Wärmeabgabe erreicht werden. Insbesondere sind nicht nur zwei benachbarte Windungen, sondern die meisten oder möglichst alle benachbarte Windungen in dieser Art und Weise ausgebildet. Bspw. können sich die Geometrien der Windungen in Längsrichtung der Spule immer abwechseln. Dann entsteht nicht nur ein Vorsprung, sondern viele Vorsprünge, nämlich jeweils einer durch jede zweite Windung, die sich von ihrer benachbarten Windung so unterscheidet, dass sie nach außen vorsteht.

Vorzugsweise sind die beiden benachbarten Windungen oder mehrere Windungen, insbesondere alle Windungen, im Bereich des Wicklungskopfes so ausgestaltet, dass sie wenigstens eine bzw. mehrere Kühlrippen ausbilden.

Gemäß einer weiteren Ausführungsform wird vorgeschlagen, dass die Windungen in Spulenlängsrichtung wenigstens zwei, insbesondere wenigstens drei unterschiedliche Querschnittsgeometrien aufweisen. Diesem Vorschlag liegt die Überlegung zugrunde, dass für die gießtechnische Herstellung von Spulen, insbesondere in großer Stückzahl, eine Geometrie vorteilhaft ist, die sich mittels einer Dauerform herstellen lässt, der Aufwand der Verwendung einer verlorenen Form somit vermieden wird. Bspw. werden hier Dauerformen vorgeschlagen für einen Wachsspritzguss, einen Vakuumguss, einen Druckguss oder einen Kokillenguss, um nur einige Beispiele zu nennen. Um einen höchstmöglichen Füllfaktor in einer Spule zu realisieren, die in einer Rotationsmaschine wie bspw. in einer Radialflussmaschine eingesetzt wird, sollten die Einzelleiter also die jeweiligen Windungen dem entsprechenden kreisbogenförmigen Verlauf von Nutgrund bzw. Luftspalt folgen. Hierbei bezieht sich die Formulierung bogenförmiger Verlauf auf einen Verlauf konzentrisch zu einer entsprechenden Drehachse der Maschine. Der bogenförmige Verlauf bezieht sich insoweit auf eine axiale Ansicht, insbesondere auf eine Ansicht bei einem Schnitt quer zur Drehachse. Sofern für die Windungsquerschnitte im Wesentlichen bogenförmige Abschnitte verwendet werden, können diese zwar einem bogenförmigen Verlauf des Nutgrunds und auch des Luftspalts folgen, gießtechnisch sind Spulen mit solchen im Schnitt bogenförmigen Windungen aber äußerst schwierig aus der entsprechenden Gussform zu entnehmen, bzw. ein entsprechendes Modell ist schwierig aus der Modellform zu entnehmen.

Es wird nun vorgeschlagen, die Querschnittsgeometrien der Windungen auch im Hinblick auf diese Problematik des Entnehmens der Spule aus der Gussform bzw. des Modells aus der Modellform anzupassen. Somit wird vorgeschlagen, unterschiedliche Querschnittsgeometrien zu verwenden, nämlich wenigstens zwei, vorzugsweise wenigstens drei, unterschiedliche Querschnittsgeometrien. So kann für die Querschnittsgeometrie, die bestimmungsgemäß am Nutgrund angeordnet wird, was der zweiten Stirnseite entspricht, eine andere Querschnittsgeometrie vorgeschlagen werden, als für die übrigen. So kann diese Windung, nämlich vom Nutgrund aus gesehen erste Windung, sich, bezogen auf ihren Querschnitt, mit einer Seite an eine Krümmung des Nutgrunds anpassen. Die andere Seite, die benachbart zu einer weiteren Windung angeordnet wird, braucht sich nicht an eine solche Krümmung anzupassen und kann gerade oder in einer anderen vorteilhaften Kontur ausgebildet sein. Die weiteren Windungen können dann ebenfalls gerade an ihren Kontaktseiten ausgebildet sein. Vorzugsweise wird die letzte Windung mit einer Seite an den gebogenen Luftspalt angepasst und ist somit mit einer Seite auch gebogen. Mit ihrer dem Luftspalt abgewandten Seite braucht sie nur an die benachbarte Windung angepasst zu sein und kann dort gerade ausgebildet sein.

Bei diesem Beispiel weist die erste Windung gegenüber der letzten Windung und gegenüber den übrigen, dazwischenliegenden Windungen, eine unterschiedliche Querschnittsgeometrie auf. Die Querschnittsgeometrie dieser dazwischenliegenden Windungen kann so gestaltet werden, dass die Spule jedenfalls im Bereich dieser Windungen einfach aus der Gussform bzw. hierbei das Modell einfach aus der Modellform entnommen werden kann. Die beiden gebogenen Seiten kommen bei diesem Vorschlag nur noch ganz außen vor, und dort können sie in der Gießform bzw. Modellform unproblematisch berücksichtigt werden.

Gemäß einer Ausgestaltung wird vorgeschlagen, dass wenigstens eine der Windungen eine trapezförmige, nicht rechteckige Querschnittsfläche aufweist und dass eine weitere der Windungen eine nicht trapezförmige Querschnittsfläche aufweist, wobei insbesondere zwei Windungen mit nicht trapezförmiger Querschnittsfläche vorgesehen sind und dazwischen mehrere Windungen mit trapezförmiger, nicht rechteckiger Querschnittsfläche angeordnet sind.

Die nicht trapezförmigen Querschnittsflächen, die bspw. wenigstens eine gebogene Seite aufweist und/oder die keine zwei zueinander parallele Seiten aufweisen, können insbesondere - bezugnehmend auf das vorige Beispiel - für die erste und/oder letzte Windung vorgesehen sein. Diese nicht trapezförmigen Querschnittsformen sind somit mit wenigstens einer Seite an eine Maschinenseite, insbesondere einen Nutgrund oder einen Luftspalt angepasst. Dazwischen können trapezförmige Querschnittsgeometrien verwendet werden, nämlich Geometrien, die zwei parallele Seiten aufweisen. Vorzugsweise ergibt sich dann eine Gesamtgeometrie dieser Windungen, bei der in Spulenlängsachse diverse parallele Seiten im Grunde geschichtet sind. Eine trapezförmige Form ergibt sich insbesondere dann, wenn die Nut, wie bei einer Rotationsmaschine, sich in axialer Richtung aufweitet bzw. verjüngt. Dann entsteht auch für einen Spulenschenkel in der Querschnittsansicht eine sich aufweitende oder verjüngende Kontur, die damit nicht parallele Seiten aufweist und dazwischenliegende Windungen zwei parallele und zwei nicht parallele Seiten aufweisen und dann trapezförmig sind. Aber selbst bei einer sich nicht verjüngenden oder aufweitenden Kontur eines Spulenschenkels können sich bspw. rechteckige Querschnittsgeometrien für die Windungen zwischen der ersten und letzten Windung einstellen. Ein Rechteck ist insoweit eine Spezialform eines Trapezes und damit auch ein Trapez. Sofern sich die erste und letzte Windung an eine gebogene Form anpasst, ist diese aber dennoch nicht trapezförmig.

Gemäß einer Ausgestaltung wird vorgeschlagen, dass die Spule dadurch gekennzeichnet ist, dass in einem ersten Spulenschenkel wenigstens eine Windung eine zu einer in Spulenlängsrichtung benachbarten Windung weisende erste Nachbaroberfläche aufweist, die insbesondere als elektrisch isolierte Kontaktfläche ausgebildet ist und in einem zweiten Spulenschenkel wenigstens eine Windung eine zu einer in Spulenlängsrichtung benachbarten Windung weisende zweite Nachbaroberfläche aufweist, die insbesondere als elektrisch isolierte Kontaktfläche ausgebildet ist, und die erste und zweite Nachbaroberfläche zueinander parallel verlaufen, insbesondere in derselben Ebene verlaufen, wobei die Spule insbesondere zur Verwendung in einer Rotationsmaschine vorbereitet ist.

Dieser Vorschlag geht somit von Nachbaroberflächen aus, die zwischen benachbarten Windungen ausgebildet sind. Solche Nachbaroberflächen sind somit im Wesentlichen Berührungsflächen oder Kontaktflächen zwischen diesen jeweils benachbarten Windungen. Solche Nachbaroberflächen beschreiben die Geometrieverbindungen zueinander an diesem Kontaktbereich. Dabei wird hier von einem Kontaktbereich im mechanischen Sinn ausgegangen. Ein elektrischer Kontakt sollte nicht vorliegen, da andernfalls ein Windungskurzschluss vorläge. Es wird somit vorgeschlagen, dass wenigstens eine Nachbaroberfläche des einen Spulenschenkels, also die erste Nachbaroberfläche, parallel zu einer Nachbaroberfläche des zweiten Spulenschenkels, also der zweiten Nachbaroberfläche, angeordnet ist. Insbesondere verlaufen zwei Nachbaroberflächen beider Spulenschenkel in einer Ebene. Zumindest sollen diese Nachbaroberflächen in einem Schnitt in Spulenlängsrichtung zueinander parallele Schnittkanten aufweisen.

Eine solche Geometrie wird insbesondere für die Verwendung in einer Rotationsmaschine vorgeschlagen und damit wird vorgeschlagen, dass wenigstens eine Nachbaroberfläche jedes der beiden Spulenschenkel nicht der Krümmung der Rotationsmaschine folgt, sondern in einer Ebene verlaufen, zumindest parallel zueinander verlaufen.

Vorzugsweise sind in jedem Spulenschenkel mehrere Nachbaroberflächen jeweils vorgesehen, die möglichst alle zueinander parallel verlaufen. Vorzugsweise verlaufen zwei Nachbaroberflächen in einer Ebene, nämlich eine Nachbaroberfläche von jedem der beiden Spulenschenkel. Vorzugsweise ist dann nur jeweils eine Seite der innersten Windung, oder innersten Windungen, und eine Seite der äußersten Windung oder äußersten Windungen an die gebogene Ausgestaltung einer Rotationsmaschine angepasst. Die Spule insgesamt ist damit an diese runde Geometrie angepasst, einige, vorzugsweise die übrigen Windungsoberflächen sind jedoch durch ihre beide Spulenschenkel übergreifende parallele Ausgestaltung an ein einfaches Entnehmen aus einer Gießform vorbereitete bzw. ein korrespondierendes Spulenmodell ist zum einfachen Entnehmen aus einer Modellform angepasst bzw. es kann hierdurch eine Modellform geschaffen werden, aus der das Modell auf einfache Weise entnommen werden kann. Durch die parallele Ausgestaltung können die meisten Windungen insbesondere durch eine Bewegung quer zur Spulenlängsachse aus der Form entnommen werden bzw. die Form kann in entgegengesetzter Richtung abgezogen werden.

Gemäß einer weiteren Ausführungsform wird eine Spule vorgeschlagen, die dadurch gekennzeichnet ist, dass die Innenfläche und die Außenfläche jedes der beiden Schenkel in radialer Richtung von der Maschineninnenseite zur Maschinenaußenseite auseinander laufen.

Dieser Vorschlag geht somit von einer Rotationsmaschine aus, für die Spulen benötigt werden, die von einem Luftspalt radial nach außen auf einen Kern, Zahn bzw. Pol eines Rotors einer Außenläufermaschine oder auf einen Kern bzw. Zahn eines Stators einer Innenläufermaschine aufgesteckt werden sollen. Insbesondere berücksichtigt dieser Vorschlag eine Geometrie der Rotationsmaschine, für die die Spule vorgesehen ist, bei der sich der Kern, Zahn bzw. Pol radial nach außen nicht oder nicht wesentlich verbreitert und/oder sich entsprechende Nuten vom Luftspalt aus radial nach außen verbreitern, so dass die Nuten zum Luftspalt hin eine Öffnung aufweisen, die kleiner ist als der Nutgrund.

Bei elektrischen Maschinen in Innenläuferbauweise gibt es nämlich durch die sich zum Luftspalt hin verjüngende Nutöffnung keine Möglichkeit, im Voraus gewickelte Spulen aufzustecken, die die Nut bzw. das Nutfenster einer Querschnittsansicht vollständig ausnutzt. Um die Aufsteckbarkeit zu gewährleisten, muss die Spulenbreite bzw. die Breite eines Spulenschenkels am Nutgrund reduziert werden, im Vergleich mit dem tatsächlich vorhandenen Raum bzw. der tatsächlich vorhandenen Breite des Nutgrunds. Das führt zu einem nicht optimalen Füllfaktor und damit reduziertem Strombelag.

Für diesen Maschinentyp, insbesondere den Stator einer Innenläufermaschine, wird nun vorgeschlagen, dass sich die Schenkel einer Spule nach außen verbreitern. Vorteilhaft ist hierbei, in dem Stator abwechselnd zwei unterschiedliche Spulen vorzusehen, von denen eine Spule wie beschrieben sich nach außen hin, bezogen auf die Rotationsmaschine, verbreitert. Die andere Spule verbreitert sich nicht und weist vorzugsweise für beide Schenkel parallel verlaufende Innen- und Außenseiten auf. In einer Nut ist dann jeweils ein Schenkel einer Spule aufgenommen, der sich radial nach außen verbreitert und einer, der sich radial nach außen nicht verbreitert, ggf. sogar verjüngt. Die Spule mit den sich verbreiternden Schenkeln wird zuerst eingesetzt.

Vorzugsweise nimmt die Dicke der Windung eines sich radial nach außen verbreiternden Schenkels mit radial nach außen zunehmender Position ab. Je weiter eine solche Windung in radialer Richtung von der Maschineninnenseite zur Maschinenaußenseite angeordnet ist, umso kleiner ist somit ihre Ausdehnung in Spulenlängsachse, was hier als Dicke der Windung bezeichnet wird. Dadurch kann der Gesamtquerschnitt der Windungen gleich bleiben, obwohl sich die Breite des jeweiligen Spulenschenkels verändert.

Somit wird auch eine Spulenanordnung für eine elektrische Maschine, insbesondere eine Rotationsmaschine vom Typ Innenläufer vorgeschlagen, die wenigstens eine erste und eine zweite Spule aufweisen, nämlich ein Spulenpaar aus einer ersten und einer zweiten Spule.

Beide Spulen sind zum Anordnen jeweils um einen ein magnetisches Feld führenden Kern der elektrischen Maschine vorgesehen, nämlich insbesondere um einen Kern oder Zahn eines Stators einer Rotationsmaschine vom Typ Innenläufer. Die Spulenanordnung kann auch mehrere Spulenpaare umfassen. Jedenfalls sind zwei unterschiedliche Spulen vorgesehen, nämlich eine erste und eine zweite Spule.

Dabei weist jede Spule eine in Richtung des magnetischen Feldes verlaufende Spulenlängsachse auf. Jede der Spulen weist mehrere aus einem elektrisch leitfähigen Spulenmaterial gegossene Windungen auf und jede Spule weist jeweils zwei, jeweils zwischen zwei benachbarten Zähnen, anzuordnende Schenkel auf.

Die beiden Spulen unterscheiden sich aber dahingehend, dass die Windungen der ersten Spule im Vergleich zu den Windungen der zweiten Spule unterschiedliche Querschnitte, insbesondere Querschnittsgeometrien, aufweisen. Außerdem oder alternativ weisen die Schenkel der ersten Spule im Vergleich zu denen der zweiten Spule unterschiedliche Querschnitte, insbesondere Querschnittsgeometrien, auf. Dabei wird von einem Schnitt entlang einer durch die Längsachsen beider Spulen aufgespannten Schnittebene oder Schnittfläche ausgegangen. Das entspricht insbesondere auch einem Schnitt senkrecht zur Drehachse der Rotationsmaschine, für die die Spulen der Spulenanordnung vorgesehen sind.

Vorzugsweise ist die erste Spule so ausgebildet, dass sich ihre Schenkel radial nach außen verbreitern, nämlich bezogen auf die Rotationsmaschine bei bestimmungsgemäßer Verwendung in dieser Rotationsmaschine. Die zweite Spule ist dabei so ausgebildet, dass sich ihre Schenkel radial nach außen nicht verbreitern. Sie können sich radial nach außen verjüngen oder ihre Breite beibehalten. Hier bezieht sich radial nach außen auf die Rotationsmaschine bei bestimmungsgemäßem Einsatz der Spule dort.

Somit sieht der vorgeschlagene Lösungsansatz vor, durch Änderung der Leiterbreite und Leiterhöhe in jeder Windungslage zwei unterschiedliche Spulengeometrien zu fertigen, die eine Steckbarkeit der Spulen bei gleichzeitiger Maximierung des Nutfüllfaktors ermöglichen.

Hierzu wird die Spule jedes zweiten Kerns, Pols bzw. Zahns in Umfangsrichtung so gestaltet, dass sich eine Verbreiterung der äußeren Berandung der ersten Spule vom Zahnende von der Öffnung in Richtung zum Nutgrund in der Art ergibt, dass der Winkel zwischen Spulenflanke und der Flanke des benachbarten Kerns, Pols bzw. Zahns, auf den zunächst noch keine Spule aufgesteckt ist, gleich Null ist, so dass Parallelität herrscht, oder größer ist, so dass eine Hinterschneidungsfreiheit des restlichen Nutfensters in Richtung Zahnende bzw. Nutöffnung gewährleistet ist. Die Nutöffnung ist damit mindestens so breit wie der Nutgrund, der verbleibt, wenn die erste Spule bereits aufgesteckt bzw. in die Nut eingeführt ist. Die Spulenflanke bzw. Außenseite der Spule wird dabei vorteilhafterweise so verschoben, dass die beiden Flächenanteile der Nut gleich groß werden. Gemäß einer Querschnittsansicht füllt also der Schenkel der ersten Spule eine gleich große Fläche aus, wie der Schenkel der zweiten Spule in derselben Nut. Zur Maximierung des Nutfüllfaktors wird die zweite Spule somit vorteilhafterweise so gefertigt, dass sie dem zur Verfügung stehenden Bauraum vollständig ausnutzt.

Erfindungsgemäß wird eine Spule vorgeschlagen, die dadurch gekennzeichnet ist, dass isolierte Kontaktflächen in Spulenlängsrichtung benachbarter Windungen um so stärker in Richtung vom Kern zur ersten Stirnseite hin geneigt bzw. ausgerichtet sind, je weiter sie von der zweiten zur ersten Stirnseite hin angeordnet sind und/oder um so stärker gebogen sind, je weiter sie von der zweiten zur ersten Stirnseite hin angeordnet sind.

In Spulen mit massiven Leitern, also Leitern mit verhältnismäßig großem Querschnitt, insbesondere solche Spulen, die nur in Spulenlängsrichtung geschichtete Windungen aufweisen, also in zur Spulenlängsachse radialer Richtung nur eine Windung aufweisen, treten bei hohen elektrischen Betriebsfrequenzen Stromverdrängungseffekte und Wirbelstromverluste auf, die zu einer Erhöhung des effektiven Widerstands und damit zu einer Senkung von Maschinenleistung und -wirkungsgrad führen. Dies ist bspw. in der bereits erwähnten Veröffentlichung G. Müller und B. Ponick beschrieben. Diese Effekte sind gerade bei solchen Leitern besonders ausgeprägt, deren räumliche Ausdehnung orthogonal zur Richtung des magnetischen Flusses angeordnet ist. Dann entstehen Wirbelströme um dieses Magnetfeld, wenn sich dieses zeitlich ändert. Eine solche zeitliche Änderung kann, aus der Sicht des betroffenen elektrischen Leiters, auch dadurch entstehen, dass sich dieser elektrische Leiter relativ zu dem Magnetfeld bewegt, wie dies in elektrischen Maschinen der Fall ist.

Gemäß einer Ausführungsform wird somit vorgeschlagen, dass isolierte Kontaktflächen in Spulenlängsrichtung benachbarter Windungen so ausgebildet sind, dass sie im Betrieb im Wesentlichen einem zu erwartenden Verlauf von Magnetfeldlinien folgen. Die Windungen werden somit so ausgebildet, dass sie nicht mehr quer zum Magnetfeld angeordnet sind, insbesondere dass die Ausdehnung jeder Windung in der jeweils zum Fluss des magnetischen Feldes senkrecht verlaufenden Richtung minimal ist und so Wirbelströme nicht mehr oder nur noch in geringerem Umfang auftreten können.

Vorzugsweise sind die isolierten Kontaktflächen zwischen benachbarten Windungen umso stärker in Richtung vom Kern zur ersten Stirnseite hin geneigt bzw. ausgerichtet, je weiter sie von der zweiten zur ersten Stirnseite hin angeordnet sind. Die isolierten Kontaktflächen und damit entsprechenden Windungen verlaufen somit in der Nähe der zweiten Stirnseite etwa parallel zu dieser. Je weiter diese Kontaktflächen und damit die zugehörigen Windungen zur ersten Stirnfläche und damit bestimmungsgemäß zu einem Luftspalt hin angeordnet sind, sind sie auch zu diesem hin geneigt, nämlich vom Kern, also von der Spulenmitte, zur ersten Stirnseite hin.

Bspw. können solche Spulen auf Kernen bzw. Zähnen eines Stators einer Rotationsmaschine angeordnet sein, um nur ein Beispiel zu nennen. Relativ zum Stator dreht sich bestimmungsgemäß ein Rotor, der ebenfalls magnetische Pole aufweist. Ein Magnetfeld verläuft in einer Position des Rotors zum Stator von einem Rotorpol durch einen Statorkern und an einer anderen Stelle zurück. Bewegt sich nun dieser Rotorpol weiter zur nächsten Nut des Stators, wird das Magnetfeld zumindest teilweise von dem Rotorpol durch diese Nut zu den beiden diese Nut einfassenden Statorkernen verlaufen. Einem solchen Verlauf des Magnetfeldes bzw. der Magnetfeldlinie folgen die Kontaktflächen der Windungen, die dort angeordnet sind. Somit laufen die Magnetfeldlinien nicht mehr quer, sondern optimalerweise längs zu den Kontaktflächen der Windungen dort und damit längs zu den Windungen. Wirbelströme können sich somit schlechter ausbilden.

Vorzugsweise wird vorgeschlagen, dass die isolierten Kontaktflächen benachbarter Windungen umso stärker gebogen sind, je weiter sie von der zweiten zur ersten Stirnseite hin angeordnet sind, je weiter sie also zum Luftspalt hin angeordnet sind. Auch eine solche Biegung oder Krümmung folgt möglichst den beschriebenen Magnetfeldlinien, die zum Teil durch die Nut verlaufen.

Vorzugweise ist somit die erste Stirnseite zum Anordnen zu wenigstens einem Luftspalt vorbereitet. Außerdem oder alternativ ist die erste Stirnseite zum Anordnen benachbart zu wenigstens einem, ein Magnetfeld führenden, relativ zu der Spule zu bewegenden Pol vorbereitet. Vorzugsweise ist die Spule zum Anordnen in einem Rotor einer elektrischen Rotationsmaschine vorbereitet und die erste Stirnfläche weist bei einer solchen bestimmungsgemäßen Anordnung zu einem Stator der Rotationsmaschine. Alternativ ist die Spule zum Anordnen in einem Stator einer elektrischen Rotationsmaschine vorbereitet, wobei die erste Stirnfläche zum Rotor der Rotationsmaschine weist, sofern sie bestimmungsgemäß eingesetzt wird.

Somit wird zur Minimierung, insbesondere der Wirbelstromverluste, vorgeschlagen, die Freiheitsgrade der gießtechnischen Herstellung zu nutzen, um die vom Magnetfeld durchsetzte Fläche des Leiters möglichst gering zu halten. Durch eine möglichst parallele Anordnung der Kontaktflächen bzw. Windung wird diese vom Magnetfeld durchsetzte Fläche des Leiters möglichst klein. Hier ist ein Ziel, den gesamten magnetischen Fluss durch den Leiter zu minimieren.

Gemäß einer Ausführung wird vorgeschlagen, dass wenigstens eine Windung, insbesondere alle Windungen einen dreieckigen Querschnitt aufweisen, und/oder eine aus mehreren, in unterschiedlichen Ebenen liegenden Kontaktflächenabschnitten zusammengesetzte, isolierte Kontaktfläche aufweisen. Bei diesem Vorschlag liegt der Gedanke zugrunde, dass für die gießtechnische Herstellung, insbesondere unter Verwendung von Dauerformen, eine höchstmögliche mechanische Stabilität der Einzelleiter hilfreich ist. Gleichzeitig sollte für eine gute Gießbarkeit das Verhältnis von Außenfläche der Leiter zum Volumen möglichst gering sein, um den Wärmeentzug der Schmelze beim Gießprozess zu begrenzen. Deshalb werden nun auch ungewöhnliche Formen vorgeschlagen, wie eine dreieckige Querschnittsform.

Außerdem oder alternativ setzen sich die Kontaktflächen benachbarter Windungen, nämlich insbesondere eines Spulenschenkels, aus wenigstens zwei Kontaktflächenabschnitten zusammen, die in unterschiedlichen Ebenen liegen. Auch hier beziehen sich Kontaktflächen auf mechanische Kontakte benachbarter Windungen. Die Windungen sind in der Kontaktfläche gegeneinander isoliert, um kein Windungskurzschluss zu erhalten. Bspw. setzt sich der Kontaktbereich aus zwei Schräg- oder im Querschnitt V-förmig zueinander angeordneten Kontaktflächen zusammen. Diese beiden V-förmig zueinander angeordneten Kontaktflächen liegen somit in unterschiedlichen Ebenen, die sich dort schneiden, wo die beiden Kontaktflächen zusammengesetzt sind. Somit entsteht ein V-förmiges Profil, das eine Stabilitätserhöhung erreichen kann. Bspw. können hier auch einige der Windungen im Querschnitt V-förmig ausgebildet sein, wobei evtl. eine erste und letzte Windung eine andere Form aufweist. Aber auch andere, bspw. treppenförmige oder anders abgestufte Kontaktflächen bzw. Kontaktbereiche, kommen in Betracht.

Insbesondere durch das Zusammensetzen von Kontaktflächen aus unterschiedlichen, nicht parallel zueinander angeordneten Ebenen führen zu kantigen Berührungslinien.

Genau diese können die mechanische Stabilität der einzelnen Windungen erhöhen. Insbesondere wird eine Biegefestigkeit der Windungen erhöht. Durch die Verwendung von Kontaktflächen aus unterschiedlichen Ebenen sind dennoch viele Möglichkeiten gegeben, auch Querschnittsformen der Windungen vorzusehen, die gießtechnisch mit vertretbarem Aufwand herstellbar sind, insbesondere so, dass sich eine gute Entnehmbarkeit solcher Windungen aus der Gießform erreichen lässt.

Dabei bezieht sich das Zusammensetzen nicht auf die Herstellung der Kontaktflächen bzw. Windungen, sondern nur auf das Ergebnis. Die Kontaktflächen entstehen nämlich in ihrer Gesamtheit beim Gießen der Spule.

Vorzugsweise weist wenigstens eine Windung, insbesondere die meisten, vorzugsweise alle bis auf zwei Windungen, der Spule ein biegesteifes Profil auf. Insbesondere wird somit ein Profil vorgeschlagen, das im Vergleich zu einem im Querschnitt rechtwinkligen Profil mit gleicher Breite und gleicher Querschnittsfläche eine höhere Biegesteifigkeit aufweist. Solche Profile sind mit vielerlei Geometrien realisierbar und in späteren konkreten Ausführungsformen gezeigten Geometrien sind nur ganz wenige von vielen möglichen Beispielen.

Außerdem wird eine elektrische Maschine, insbesondere ein Rotationsmotor und/oder ein Rotationsgenerator vorgeschlagen, die mit wenigstens einer Spule gemäß einem der obigen Ausführungsformen versehen ist und/oder die mit wenigstens einer Spulenanordnung gemäß einer der oben beschriebenen Ausführungsformen versehen ist.

Außerdem wird ein Verfahren zum Herstellen, wenigstens einer, mehrere Windungen und wenigstens zwei Schenkel aufweisende Spule, für eine elektrische Maschine vorgeschlagen. Dieses Verfahren umfasst wenigstens die Schritte:

- Festlegen der Größe wenigstens eines Wickelraumes zum Anordnen eines der Schenkel der Spule,
- Bestimmung eines individuellen Windungsquerschnitts für unterschiedliche Windungen, insbesondere für jede einzelne Windung und
- Gießen der Spule mit individuellen Windungsquerschnitten.

Mit einem solchen Verfahren können insbesondere Spulen gemäß wenigstens einer der oben beschriebenen Ausführungsformen hergestellt werden. Für unterschiedliche Windungen, insbesondere für jede einzelne Windung des Schenkels der Spule, werden individuelle Windungsquerschnitte bestimmt. Hierzu kann wenigstens eine der oben bei der Erläuterung der Ausführungsformen zugrundegelegten Anforderung zugrundegelegt werden. Als begrenzende Größe dieser Bestimmung wird der zur Verfügung stehende Wickelraum des Schenkels der Spule verwendet.

Insbesondere werden die individuellen Windungsquerschnitte in Abhängigkeit bestimmt von

- einer über den Wickelraum verteilten, ortsabhängigen Kühlleistung,
- einer Entfernung der jeweiligen Windung und/oder eines jeweiligen Windungsabschnitts von einer Wärmesenke,
- einer Entformbarkeit der Spule aus einer Gießform und/oder einer Entformbarkeit eines Spulenmodells aus einer Modellform,
- im Betrieb der Maschine zu erwartenden Wirbelströmen, insbesondere verursacht durch Streufelder und/oder Stromverdrängungen verursacht durch jeweils benachbarte Windungen oder Pole,
- einem Einsetzvorgang zum Einsetzen der herzustellenden Spule und wenigstens einer weiteren Spule in die herzustellende Maschine, bei dem sich ein Schenkel der herzustellenden Spule und ein Schenkel der weiteren Spule einen Wickelraum zwischen zwei Kernen, Pole bzw. Zähnen teilen, und/oder
- einer gewünschten Steifigkeit der herzustellenden Spule und/oder einer gewünschten Steifigkeit eines Spulenmodells zum Fertigen einer Form für die herzustellende Spule.

Die Art und Weise der Bestimmung der individuellen Windungsquerschnitte ergibt sich aus den oben beschriebenen Ausführungsformen der verschiedenen Möglichkeiten der Ausgestaltung der Spule bzw. Spulenanordnung.

Nachfolgend wird die Erfindung anhand von Ausführungsbeispielen und nicht erfindungsgemäßen Beispielen exemplarisch unter Bezugnahme auf die begleitenden Figuren näher erläutert.

Fig. 1    zeigt schematisch in einer perspektivischen, geschnittenen Ansicht drei Zähne eines Stators mit unterschiedlichen Spulen.

Fig. 2    zeigt in einer perspektivischen Ansicht eine der mittleren Spule der Fig. 1 entsprechende Spule.

Fig. 3    zeigt die gießtechnisch hergestellte Spule der Fig. 2 in einem gestreckten Zustand, in dem die Spule gegossen wird.

Fig. 4    zeigt einen Querschnitt einer gießtechnisch hergestellten Spule mit einer Nomenklatur der Geometrien der Spule, als Basis für eine Berechnung der Geometrien.

Fig. 5    zeigt eine gießtechnisch hergestellte Spule in einer Schnittansicht mit Windungen mit unterschiedlichen Querschnitten, aber gleichen Flächeninhalten der Querschnitte.

Fig. 6    zeigt eine Spule in einer Schnittansicht mit Windungen mit unterschiedlichen Querschnittsflächen und unterschiedlichen Flächeninhalten der Querschnittsflächen.

Fig. 7    zeigt eine auf einen Statorzahn aufgesteckte Spule in einer Schnittansicht.

Fig. 8    zeigt eine Modellform zum Gießen eines Spulenmodells mit gegossenem Modell in einer Schnittansicht.

Fig. 9    zeigt in einer Schnittansicht eine auf einen Statorzahn aufgesteckte Spule mit Windungen unterschiedlicher Querschnittsgeometrien.

Fig. 10    veranschaulicht das Problem des Einsetzens von Spulen in einen Stator einer Rotationsmaschine vom Typ Innenläufer.

Fig. 11      zeigt in einer Schnittansicht einen Stator einer Rotationsmaschine vom Typ Innenläufer mit hohem Füllfaktor eingesetzten Spulen.

Fig. 12      zeigt in einer schematischen Schnittansicht magnetische Feldlinien in einer Statornut mit eingesetzten Spulenschenkeln.

Fig. 13      zeigt Magnetfeldlinien in einer Statornut mit eingesetzten Spulenschenkeln mit an die Feldlinien teilweise angepassten Windungen.

Fig. 14 bis 16      zeigen verschiedene Geometrien für Spulenwindungen in einer schematischen Schnittansicht.

Fig. 17      zeigt einen Ausschnitt einer erfindungsgemäßen Spule im Bereich ihres Wicklungskopfes in einer perspektivischen Darstellung.

Fig. 18      zeigt eine Spule gemäß Fig. 17 in einer gestreckten Ausbildung, in der die Spule in einer Gießform gegossen wird.

Bei der nachfolgenden Beschreibung verschiedener Ausführungsformen und Beispielen anhand der Figuren können die Figuren u.a. identische Bezugszeichen für ähnliche, nicht identische Elemente verwenden, um dadurch die funktionale Ähnlichkeit hervorzuheben.

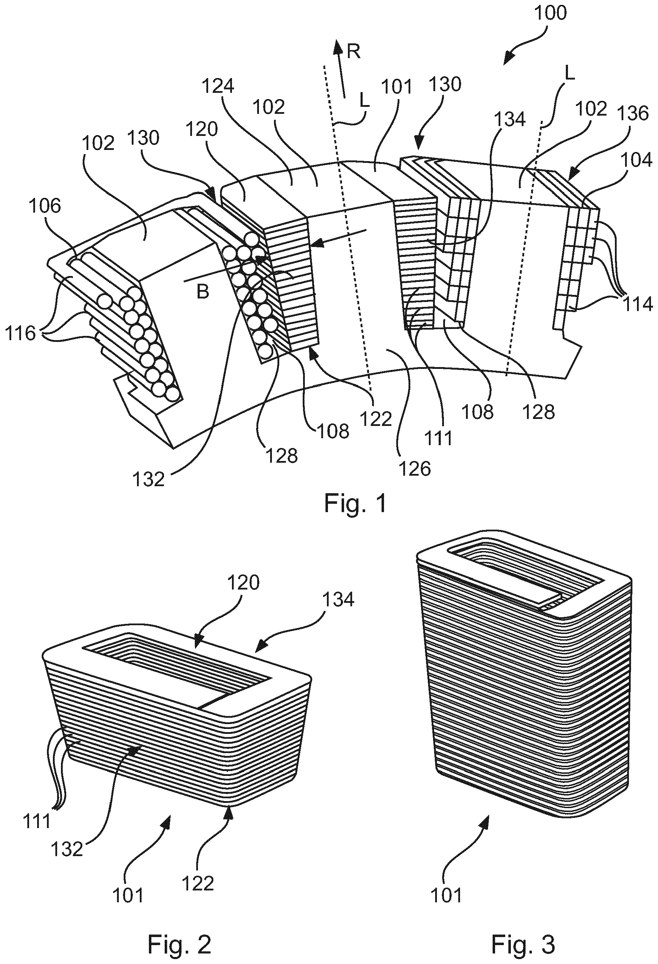

Fig. 1 zeigt einen Ausschnitt aus einem Stator 100 mit drei Statorzähnen 102, wobei auf jeden Statorzahn 102 jeweils eine Spule 101, 104 bzw. 106 aufgesteckt ist. Fig. 1 soll dabei die Unterschiede der Spulen 101, 104 und 106 verdeutlichen, nicht jedoch eine reale Bestückung eines Stators 100 wiedergeben. Üblicherweise weist ein Stator 100 jeweils gleiche Spulen auf, also nur Spulen gemäß Spule 101 oder nur gemäß Spule 104 oder nur gemäß Spule 106.

Spulen 104 und 106 sind demnach gewickelte Spulen. Die Spule 106 weist dabei Windungen 116 mit rundem Querschnitt auf. Durch den runden Querschnitt entstehen Zwischenräume zwischen den Windungen 116, die somit zu einem ungünstigen Füllfaktor führen.

Die Spule 104 weist Windungen 114 mit rechtwinkligem, rechteckigem Querschnitt auf. Dadurch können Zwischenräume zwischen den Windungen 114 minimiert werden. Die Nut 108 lässt sich dennoch nicht optimal ausfüllen, weil zur Nachbarspule, die hier durch die Spule 101 gebildet wird, schräge, nicht vollständig ausfüllbare Bereiche entstehen.

Eine der Theorie nach vollständige Ausfüllung der Nuten 108 ist dabei im Grunde mit der gießtechnisch hergestellten Spule 101 erreichbar. Die gießtechnisch hergestellte Spule 101 weist dabei viele Windungen 111 auf, die hier der Einfachheit halber mit demselben Bezugszeichen 101 gekennzeichnet sind, obwohl diese sich in radialer Richtung, bezogen auf den Stator 100, jedenfalls in ihrer Breite verändern. Die gießtechnisch hergestellte Spule 100 ist dabei so aufgebaut, dass sich ihre Windungen 111 in radialer Richtung an den vorhandenen Platz in der Nut 108 verbreitern. Dabei liegt jeweils immer nur eine Wicklung in einer Ebene. Dadurch kann sich die Spule 101 sehr genau an den vorhandenen Raum anpassen und somit einen möglichst großen Füllfaktor erreichen.

Anhand der Fig. 1 sollen auch einige Begriffe nachfolgend erläutert werden, die für die gesamte Beschreibung, einschließlich Figurenbeschreibung und Ansprüche Gültigkeit haben, auch wenn einige dieser Begriffe im Zusammenhang mit anderen Ausführungsformen mit anderen Bezugszeichen versehen sind und ggf. auch in ihrer konkreten Ausgestaltung anders sind.

Demnach ist die Spule 101 zum Anordnen um einen Kern vorbereitet, der hier als Statorzahn 102 ausgebildet ist. Aufgrund seiner funktionalen Bedeutung kann er auch als Kern bezeichnet werden, im Fall der Fig. 1 nämlich als Statorkern. Dieser Kern oder Statorzahn 102 weist eine Längsachse L auf, die auch eine Spulenlängsachse L der Spule 101 bildet, sofern die Spule 101 auf diesen Statorzahn 102 aufgesteckt ist, wie die Fig. 1 zeigt. Der Statorzahn 102 erstreckt sich dabei von dem Stator 100 aus radial nach außen, was in Fig. 1 als Pfeil R gekennzeichnet ist. Diese radial nach außen weisende Richtung fällt mit der Spulenlängsachse L und damit der Statorzahnlänge L zusammen.

Die Spule 101 weist eine erste Stirnseite 120 und zweite Stirnseite 122 auf. Eine Richtung von der zweiten Stirnseite 122 zur ersten Stirnseite 120 entspricht somit der radial nach außen weisenden Richtung R, wenn die Spule 101 auf den Statorzahn 102 aufgesteckt ist.

Der Statorzahn 102 weist ein Zahnende 124 und eine Zahnbasis 126 auf. Zwischen zwei Zähnen 102 ist jeweils eine Nut 108 ausgebildet. Jede Nut 108 weist einen Nutgrund 128 und eine Nutöffnung 130 auf.

Jede Spule weist einen ersten und zweiten Schenkel 132, 134 auf. Die Breite B jedes Schenkels 132 bzw. 134, die sich abhängig ihrer Position entlang der Längsachse L verändern kann, bezieht sich auf eine Richtung etwa quer zur Spulenlängsachse L und dabei auf eine Richtung zu den benachbarten Spulen 104 bzw. 106 und/oder benachbarten Statorzähnen 102 hin. Im gezeigten Fall eines Stators 100 einer Rotationsmaschine bezieht sich die Breite B etwa auf eine Drehrichtung der elektrischen Maschine, von der der Stator 100 ein Teil bildet.

Fig. 1 zeigt einen Querschnitt entlang der Längsachse L, wobei die Schnittfläche so gewählt ist, dass die Längsachsen L wenigstens zweier Spulen bzw. zweier Statorzähne 102, bei bestimmungsgemäßer Anordnung der Spule, in der Schnittebene liegen. Auch die weiteren gezeigten Schnittansichten nachfolgender Ausführungsformen und bereits beschriebener Ausführungsformen beziehen sich auf eine solche Querschnittsansicht. Im Falle einer Anwendung in einer Rotationsmaschine, wie es auch bei Fig. 1 der Fall ist, entspricht diese Schnittebene einer Schnittebene senkrecht zur Drehachse der Rotationsmaschine.

Im gezeigten Beispiel der Fig. 1 befindet sich ein Luftspalt 136, der in Fig. 1 lediglich durch das Bezugszeichen 136 angedeutet ist, unmittelbar benachbart zu der ersten Stirnseite 120 und dem Zahnende 124.

Fig. 2 zeigt die Spule 101 der Fig. 1 schematisch in einer perspektivischen Ansicht. Die Spule 101 weist demnach 22 Windungen 111 auf. Außerdem ist die erste Stirnseite 120 zu erkennen, wohingegen die zweite Stirnseite 122 gemäß der Darstellung der Fig. 2 nach unten weist. Der erste Schenkel 132 ist die dem Betrachter in Fig. 2 zugewandte Seite, wohingegen der zweite Schenkel 134 von dem Betrachter abgewandt ist. Bestimmungsgemäß werden der erste und zweite Schenkel 132, 134 jeweils in einer eigenen Nut 108 angeordnet. Bereiche der Spule 101, die die beiden Schenkel 132 und 134 verbinden, sind für das Verständnis der Erfindung von untergeordneter Bedeutung, sofern sie nicht konkret erwähnt werden.

Die Spule 101 wird durch ein gießtechnisches Verfahren hergestellt. Dafür stellt eine entsprechende Gießform einen etwa spiralförmigen Gießraum zur Verfügung. Nachdem die Spule 101 gegossen ist, weist sie zunächst eine gestreckte Form auf, wie in Fig. 3 gezeigt ist. Zur Anwendung in einer elektrischen Einrichtung, wie bspw. zur Anwendung in einem Stator 100 gemäß Fig. 1, wird diese Spule 101 dann gestaucht, wie in Fig. 2 gezeigt ist.

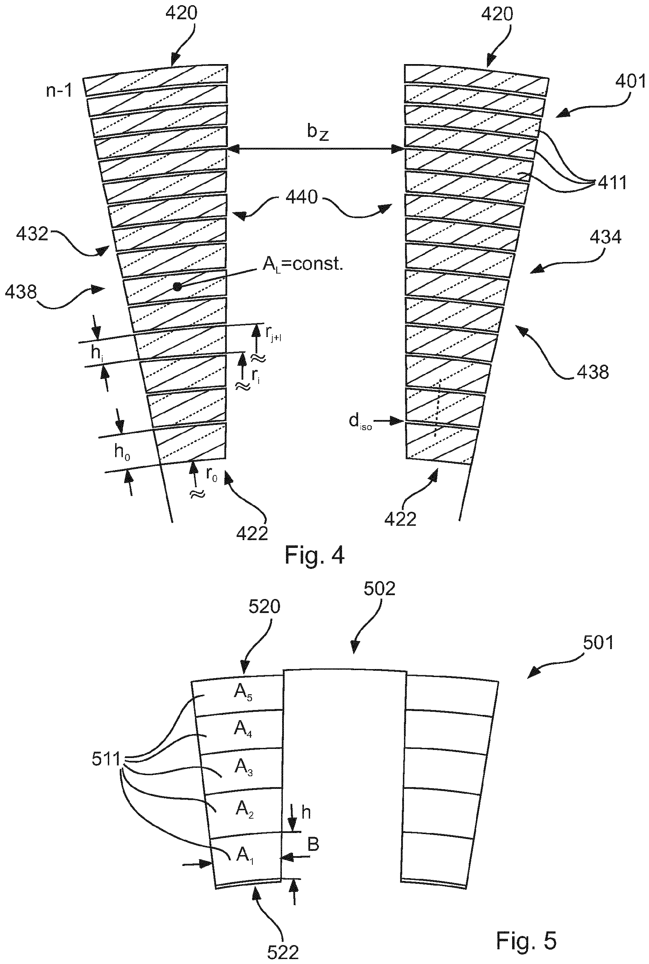

Fig. 4 zeigt schematisch eine Schnittansicht einer Spule 401, wobei insbesondere die beiden Schenkel 432 und 434 zu erkennen sind. In Fig. 4 sind für eine geometrische Berechnung relevante Größen zu entnehmen, nämlich verschiedene Höhen $h_i$, wobei die Variable i Werte von 0 bis n-1 annehmen kann, wobei in dem Beispiel der Fig. 1 n den Wert 15 hat, weil 15 Windungen 411 vorgesehen sind. Dabei wird von der zweiten Stirnseite 422 zur ersten Stirnseite 420 gezählt. Der Radius bei Anordnung in einer Rotationsmaschine vom Drehmittelpunkt bis zur zweiten Stirnseite 422 hat den Wert $r_0$. Entsprechend sind die Radien der weiteren Windungen mit $r_i$ bezeichnet. Der Radius bezieht sich dabei jeweils auf eine zur zweiten Stirnseite weisende Seite der jeweiligen Windung. Zwischen zwei benachbarten Windungen 411 ist ein geringer Isolationszwischenraum, dessen Dicke als $d_{iso}$ bezeichnet wird und vorzugsweise zwischen den Windungen jeweils identisch ist. Jede Windung hat dabei in der Querschnittsansicht eine Querschnittsfläche $A_L$, die in der gezeigten Ausführung der Fig. 4 konstant ist. Die Größe der Querschnittsfläche ist somit der Flächeninhalt dieser Querschnittsfläche. Weiterhin ist noch die Breite $b_z$ zur Berechnung von Bedeutung, die den Abstand der beiden Schenkel 432 und 434 bezeichnet und abzüglich einer Toleranz der Breite eines Zahns, insbesondere Statorzahn wie der Statorzahn 102 der Fig. 2, entspricht. Die beiden Schenkel 432 und 434 der Spule 401 weisen jeweils eine Außenseite 438 und eine Innenseite 440 auf. Die Innenseiten 440 weisen somit bei bestimmungsgemäßer Anordnung zu einem Kern, Zahn bzw. Pol, auf den die Spule aufzustecken ist. Die beiden Außenseiten 438 stehen in einem Winkel $\alpha$ zueinander, der in Fig. 4 nicht eingezeichnet ist, aber bei der nachfolgenden Berechnung für den Flächeninhalt von Bedeutung ist. Nun kann für jede der Windungen 411 ausgehend von der festen Querschnittsfläche $A_L$ die Höhe jeder einzelnen Windung in guter Näherung bestimmt werden.

$$h_i = r_i / \alpha \left( \alpha - \sin\left(\arcsin\left(b_z / 2r_i\right)\right)\right)$$
$$+ \sqrt{\left(r_i / \alpha \left( \alpha - \sin\left(\arcsin\left(b_z / 2r_i\right)\right)\right)\right)^2 - 2A_L / \alpha}$$

$$r_{i+1} = r_i + h_i + d_{iso}$$

Fig. 5 zeigt ein Beispiel einer Spule 501, die auf einen Zahn 502 aufgesteckt ist und exemplarisch fünf Windungen 511 aufweist. Diese Windungen weisen jeweils einen Querschnitt mit dem Flächeninhalt $A_1$ bis $A_5$ auf. Es ist zu erkennen, dass von der zweiten Stirnseite 522 hin zur ersten Stirnseite 520 die Breite B der Windungen 511 zunimmt, wohingegen die Höhe h dabei abnimmt. Im Ergebnis bleibt die Querschnittsfläche der Windungen gleich, es gilt also: $A_1 = A_2 = A_3 = A_4 = A_5$.

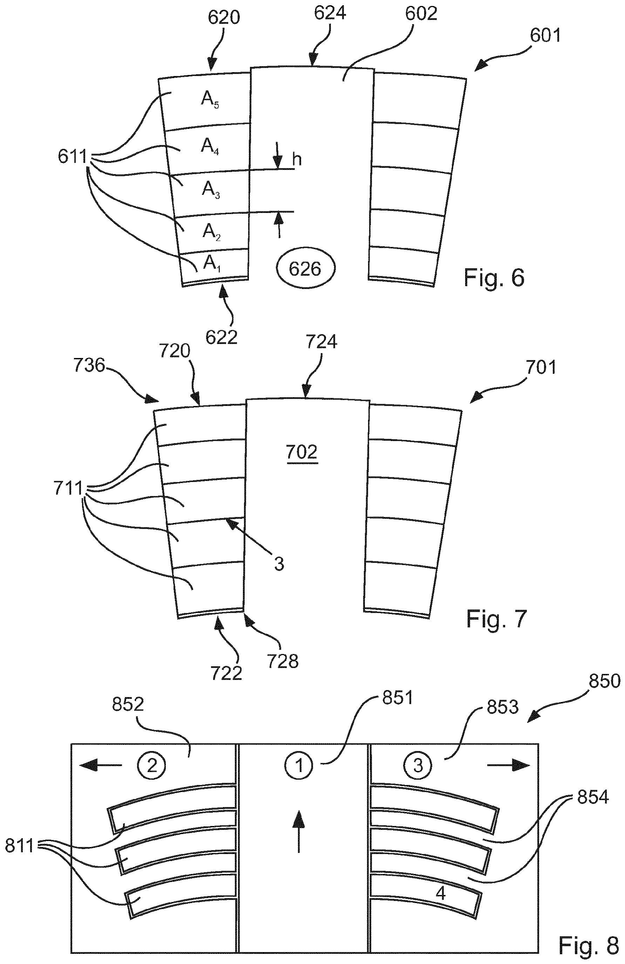

Fig. 6 zeigt ebenfalls eine Querschnittsansicht einer Spule 601, bei der die Querschnittsflächen $A_1$ - $A_5$ von der zweiten Stirnseite 622 zur ersten Stirnseite 620 hin zunehmen. Dabei ist die Spule 601 und damit ihre Windungen 611 um einen Zahn 602 angeordnet. Die Querschnittsflächen $A_1$ - $A_5$ der Windungen 611 nehmen dabei von der Zahnbasis 626 zum Zahnende 624 hin zu. An der Zahnbasis 626 kann Wärme leichter abgeführt werden, insbesondere durch den Stator, von dem der Zahn 602 einen Teil bildet. Das Zahnende 624 ist jedoch zu einem Luftspalt gerichtet und somit kann dort weniger Wärme abgeführt werden.

Dadurch, dass die Querschnittsflächen der Windungen 611 zum Zahnende hin zunehmen, entstehen dort weniger Stromwärmeverluste und daher ist dort auch weniger Wärmemenge abzuführen. Die Wahl der Querschnittsflächen, die im gezeigten Beispiel $A_1$ - $A_5$ sind, ist somit auf die thermischen Eigenschaften der elektrischen Einrichtung, insbesondere der elektrischen Maschine insgesamt abgestimmt.

Die Fig. 6 zeigt dabei eine beispielhafte Ausführung für eine Maschine in Außenläuferbauweise. Die Leiterhöhe h, die auch Windungshöhe h genannt werden kann, wird in jeder Windung so angepasst, dass sich zum Spalt hin, der sich unmittelbar benachbart zum Zahnende 624 und zur ersten Stirnseite 620 befindet, eine Vergrößerung der Querschnittsfläche und damit eine lokale Verringerung des elektrischen Widerstandes ergibt. Der elektrische Widerstand der gesamten Spule erhöht sich aufgrund des antiproportionalen Zusammenhangs zwischen Querschnittsfläche und Widerstand geringfügig, wobei sich durch das bessere thermische Verhalten für den Betrieb der elektrischen Maschine aber dennoch Vorteile ergeben. Dem entgegen sind bei gewickelten Spulen mit konstantem Leiterquerschnitt über die Länge die Stromdichte und damit die Verlustleistungsdichte an allen Orten in der Spule, soweit parasitäre Effekte vernachlässigt werden, konstant.

Alternativ zu der in Fig. 6 veranschaulichten Lösung ist auch eine Querschnittserhöhung in axialer Richtung am Wicklungskopf möglich. Hierbei werden die Leiter in jeder Lage und damit für jede Windung unterschiedlich breit gestaltet, um die zur Kühlung zur Verfügung stehende Austauschfläche mit der Umgebungsluft zu vergrößern. Durch eine solche Veränderung des Querschnitts der Windung in Windungslängsrichtung, also abhängig von der Position entlang der Windung, also entlang der jeweiligen Leiter, kann die Oberfläche und damit Angriffsfläche insbesondere für die Umgebungsluft im Bereich der Wickelköpfe erhöht werden. Dabei ist unter den Wickelköpfen der Bereich zu verstehen, in dem die Windungen aus einer Nut kommend in die für sie relevante nächste Nut geführt werden.

Ebenfalls können auch hier unterschiedliche Querschnitte vorgesehen sein, um abhängig von der dort zu erwartenden lokalen Kühlung die Querschnitte und damit die Strombeläge anzupassen.

Für die gießtechnische Herstellung von Spulen in großer Stückzahl wird eine Geometrie benötigt, die sich mittels einer Dauerform herstellen lässt. Um einen höchstmöglichen Füllfaktor in einer Spule zu realisieren, wie sie beispielsweise in der Fig. 7 gezeigt ist, müssen die Einzelleiter, also die jeweiligen Windungen, in einer Radialflussmaschine dem kreisbogenförmigen Verlauf von Nutgrund bzw. Luftspalt folgen, bezogen auf eine Querschnittsdarstellung eines Schnitts quer zur Drehachse einer solchen Radialflussmaschine. Ein Geometrievorschlag, der dies bei gleichbleibender Querschnittsfläche gewährleistet, ist in dem bereits oben genannten Aufsatz von M. Gröninger und A. Kock et al. "Casting production of coils for electrical machines" und in der deutschen Patentanmeldung DE 10 2010 020 897 A1, die ebenfalls oben bereits genannt wurde, beschrieben. Fig. 7 zeigt eine solche Spule im Querschnitt.

Die Spule 701, die in Fig. 7 in einer Schnittansicht dargestellt ist, ist auf einen Zahn 702 aufgesteckt. Die zweite Stirnseite 722 ist dabei an einen Nutgrund 728 angepasst. Insbesondere ist zu erkennen, dass diese zweite Stirnseite 722 leicht gebogen ist. Eine solche oder ähnliche Biegung weisen alle der Windungen 711 auf, auch die erste Stirnseite 720 ist dabei etwas gebogen und ähnlich wie das Zahnende 724 an die Rundung eines Luftspalts angepasst, der mit dem Bezugszeichen 736 angedeutet ist.

Problematisch oder zumindest kompliziert ist die Herstellung einer solchen gießtechnisch hergestellten Spule 701.

Zur Veranschaulichung zeigt die Fig. 8 eine Form 850 zum Herstellen einer Spule 801, von der exemplarisch drei Windungen 811 in der Form 850 gezeigt sind. Die Form 850 könnte ebenso eine Modellform 850 zum Herstellen eines Modells mit Modellwindungen betreffen. Um die gießtechnische Herstellung der in Fig. 7 gezeigten Spule 701 zu ermöglichen, ist in dem bereits genannten Aufsatz von Groninger und Kock et al. ein Strecken der Spule erforderlich, um einen Abstand der Windungen zueinander zu gewährleisten. Solche Abstände finden sich in der Form 850 als Formzwischenwände 854 wieder, die dort jeweils zwischen den Windungen 811 angeordnet sind. Hier sei nochmals auf die Fig. 3 verwiesen, die eine entsprechend gestreckte Spule 101 zeigt. Somit ist eine Möglichkeit der Fertigung einer gestreckten Geometrie mittels einer mehrteiligen Dauerform 850 schematisch in Fig. 8 gezeigt. Diese Form 850 weist jedenfalls die Formteile 851, 852 und 853 auf. Durch die Pfeile 1, 2 und 3 sind Entformungsrichtungen der drei Formteile 851 bis 853 veranschaulicht.

Die Entformungsrichtungen 1 bis 3 für die Formteile 851 bis 853 sind somit durch die Pfeile in der Fig. 8 gezeigt. Während das Entformen für das Formteil 851, also das Entfernen des Formteils 851, wenig Probleme bereitet, ist zu den beiden Formteilen 852 und 853 erkennbar, dass durch die bogenförmige Ausgestaltung der Windungen 811, bezogen auf die gezeigte Schnittansicht, Hinterschneidungen zwischen diesen Windungen 811 und den Formteilen 852 und 853 auftreten, so dass die Windungen 811 nicht ohne weiteres aus den Formteilen 852 und 853 entnommen werden können. Durch die bogenförmige Leiterform ergeben sich zwischen den Einzelleitern somit Hinterschneidungen, die es notwendig machen, die Dauerform aus einem flexiblen Material zu fertigen. Die Fertigung von metallischen Dauerformen für Druckguss-, Kokillenguss- oder Spritzgussverfahren ist mit einer solchen Geometrie nicht möglich.

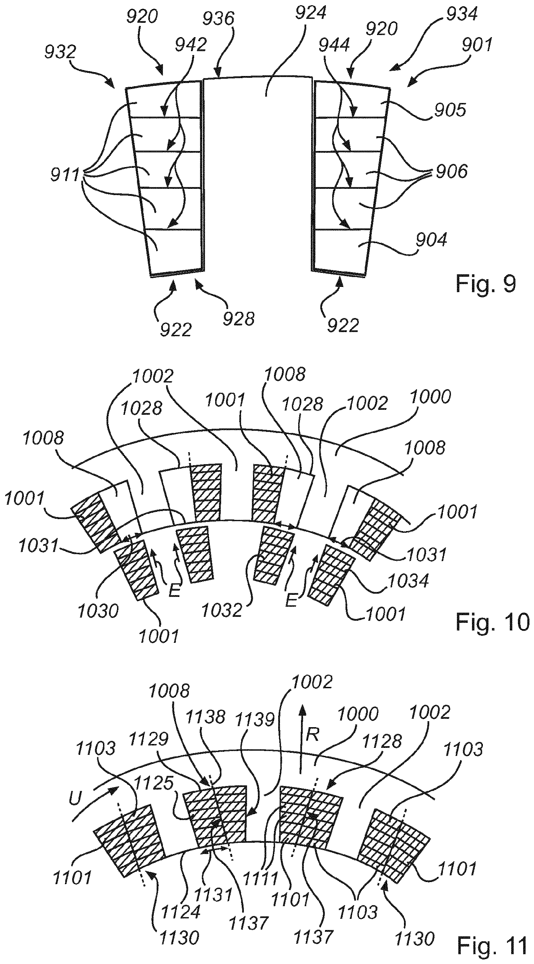

Fig. 9 zeigt eine Spule 901, die das Problem der Spule 801, das auch im Zusammenhang mit der Form 850 der Fig. 8 beschrieben wurde, lösen hilft. Die Spule 901 kann dabei dieselben elektrischen Eigenschaften aufweisen wie die Spule 701 und insbesondere dieselben Querschnittsgrößen für die Windungen 911 aufweisen, wie die Querschnittsgrößen der Windungen 711. Dabei ist die Spule 901 der Fig. 9 lediglich mit ihrer zweiten Stirnseite 922 und ersten Stirnseite 920 an Rundungen einer Rotationsmaschine angepasst. Die Windungen 911 sind somit differenzierter betrachtet worden. Es ist nämlich eine unterste Windung 904 und eine oberste Windung 905 vorgesehen, die entsprechend die Rundung der zweiten Stirnseite 922 bzw. ersten Stirnseite 920 verwirklichen. Dazwischen sind in dem gezeigten Beispiel drei Zwischenwindungen 906 vorgesehen, die keine Rundungen aufweisen. Somit sind die Querschnitte der untersten und obersten Windung 904 bzw. 905 nicht trapezförmig, wohingegen die Querschnitte der Zwischenwindungen 906 trapezförmig sind.

Gleichzeitig ist zu erkennen, dass Kontaktflächen 942 zwischen Windungen des ersten Schenkels 932 und Kontaktflächen 944 zwischen den Windungen des zweiten Schenkels 934 vorgesehen sind, die jeweils parallel zueinander ausgebildet sind. Dadurch entsteht eine Form für die Windungen, wenigstens die Zwischenwindungen 906, die sich leichter aus einer Gießform entnehmen lassen. Die Fig. 9 zeigt dabei ein besonderes Beispiel, bei der jeweils eine Kontaktfläche 942 des ersten Schenkels 932 in einer Ebene mit einer Kontaktfläche 944 des zweiten Schenkels 934 liegt. Jedenfalls wird vorgeschlagen, dass wenigstens eine Kontaktfläche 942 des ersten Schenkels 932 parallel zu wenigstens einer Kontaktfläche 944 des zweiten Schenkels 934 verläuft. Bei solchen Kontaktflächen lässt sich eine Spule besonders einfach aus einer entsprechenden Gießform entnehmen bzw. ein Modell entsprechend einfach aus einer Modellform entnehmen. Die Gießform bzw. Modellform braucht hierzu nicht elastisch ausgestaltet zu sein. Es wird auch die Verwendung einer Dauerform ermöglicht bzw. vereinfacht.

Einzig problematisch oder etwas schwieriger zu handhaben könnte die Rundung der zweiten bzw. ersten Stirnseite 922 bzw. 920 sein. Aufgrund der Anordnung dieser beiden Rundungen jeweils nach außen hin, kann hier aber ein entsprechendes Abschlussformteil vorgesehen sein.

Der gemäß Fig. 9 veranschaulichte Lösungsansatz vermeidet somit das Auftreten von Hinterschneidungen in horizontaler Richtung durch die Verwendung von drei unterschiedlichen Leitergeometrien in der Nut, nämlich für die unterste Windung 904, die oberste Windung 905 und die Zwischenwindungen 906. Die unterste und die oberste Windung, die auch als unterste und oberste Lage bezeichnet werden können, werden somit durch radial begrenzte Leiter gebildet, die also entsprechend an die elektrische Maschine angepasste Rundungen aufweist, während die Zwischenwindungen 906, die auch als Zwischenlagen bezeichnet werden können, im Querschnitt trapezförmige Leiter mit horizontalen Ober- und Unterseiten aufweisen, nämlich mit horizontalen Kontaktflächen 942 bzw. 944. An diese Geometrie der Spule 901 der Fig. 9 angepasste Formteile entsprechend der Formteile 852 und 853 der Fig. 8, können bei dieser Geometrie der Spule 901 seitlich herausgeführt werden.

Das Beispiel gemäß Fig. 9 sieht somit insbesondere eine Spule 901 vor, die nur zum Nutgrund 928 und zum Luftspalt 936 bzw. Zahnende 924 hin Rundungen aufweist.

Fig. 10 erläutert eine weitere, insbesondere bei gießtechnisch hergestellten Spulen auftretende Problematik. Fig. 10 zeigt dabei in einem Querschnitt einen Ausschnitt eines Stators 1000 einer Innenläufermaschine. Der Stator 1000 weist mehrere Statorzähne 1002 mit dazwischenliegenden Nuten 1008 auf. Die Nuten 1008 weisen einen breiten Nutgrund 1028 als eine Nutöffnung 1030 auf. Die Statorzähne 1002 verjüngen sich dabei oder verbreitern sich dabei nicht.

Zur Veranschaulichung zeigt die Fig. 10 wenigstens eine vollständig eingesetzte Spule 1001 und es sind zwei weitere Spulen 1001 gezeigt, die noch nicht in den Stator 1000 eingesetzt sind. Diese beiden noch nicht eingesetzten Spulen 1001 können auch nicht mehr eingesetzt werden, wie die Einsetzrichtung E veranschaulicht, weil die verbleibende Öffnung jeder Nutöffnung 1030 schmaler ist, als die breiteste Breite der einzusetzenden Spulenschenkel 1032 bzw. 1034. Die verbleibende Nutöffnung 1031 ist durch einen Doppelpfeil veranschaulicht.

Fig. 11 zeigt dieselbe Rotationsmaschine und damit denselben Stator 1000, der Fig. 10 zugrundeliegt, mit derselben Geometrie für die Statorzähne 1002 und den jeweils dazwischenliegenden Nuten 1008. Der vorgeschlagene Lösungsansatz sieht vor, durch Änderung der Leiterbreite und Leiterhöhe in jeder Windungslage zwei unterschiedliche Spulengeometrien zu fertigen, die eine Steckbarkeit der Spulen bei gleichzeitiger Maximierung des Nutfüllfaktors ermöglichen. Entsprechend ist eine erste Spule 1101 und zweite Spule 1103 vorgesehen. Die erste Spule 1101 verbreitert sich in radialer Richtung R nach außen. Diese radiale Richtung R bezieht sich auf die Geometrie der Rotationsmaschine, von der der Stator 1000 gezeigt ist. Vorteilhaft ist es, wie auch die Fig. 11 zeigt, wenn trotz Verbreiterung der Spule 1101 und damit ihrer Windungen 1111 in radialer Richtung der Querschnitt jeder der Windungen 1111 dabei die gleiche Größe behält. Ihre Außenflächen 1137 weisen somit einen Winkel zueinander auf, der größer null ist, insbesondere größer als ein Winkel der Längsachsen zweier benachbarter Zähne 1002 ist, vorzugsweise etwa doppelt so groß ist. Ihre Innenflächen 1139 können parallel zueinander verlaufen. Entsprechend können die breiteren Windungen 1111 entsprechend eine geringere Höhe aufweisen. Es ist somit trotz dieser angepassten Geometrie zum Vereinfachen bzw. Ermöglichen des Einsteckens der Spule 1101 die Möglichkeit geschaffen, einen gleichen Strombelag über die gesamte Spule, also in jeder Windung 1111 zu realisieren.

Die zweite Spule 1103 weist keine Verbreiterung in radialer Richtung nach außen auf. Sie kann grundsätzlich auch identische Windungen, jedenfalls bezogen auf die Querschnittsform der Windungen, aufweisen. Allerdings können sich leichte Unterschiede durch die zu realisierenden Rundungen ergeben, die nämlich zum Nutgrund 1128 eine etwas geringere Krümmung aufweisen, als zur Nutöffnung 1130.

Somit wird die Spule jedes zweiten Zahns in Umfangsrichtung U des Stators 1000 so gestaltet, dass sich eine Verbreiterung der äußeren Berandung der Spule, hier nämlich der ersten Spule 1101, vom Zahnende 1124 zum Nutgrund 1128 in der Art ergibt, dass sich ein Winkel zwischen einer äußeren Spulenflanke bzw. Spulenaußenseite 1138 der ersten Spule 1101 zu einer Zahnflanke 1125 von 0 Grad oder größer ergibt, so dass eine Hinterschneidungsfreiheit des verbleibenden Nutfensters in Richtung des Zahnendes 1124 gewährleistet ist. Fig. 11 zeigt dabei einen solchen Winkel zwischen der Außenseite 1138 bzw. Spulenflanke 1138 zur Zahnflanke 1125 von 0 Grad, so dass diese beiden Flanken parallel zueinander verlaufen. Die verbleibende Nutöffnung 1131 ist damit mindestens so breit wie der verbleibende Nutgrund 1129, bezogen auf die Situation, dass die erste Spule 1101 bereits eingesetzt ist, die zweite Spule 1103 jedoch noch nicht. Die Spulenflanke 1138 wird vorteilhafterweise so verschoben bzw. so fest gesetzt, dass bezogen auf die Querschnittsansicht die jeweiligen Flächenanteile in der Nut für die erste Spule 1101 und zweite Spule 1103 gleich groß werden. Entsprechend wird zur Maximierung des Nutfüllfaktors die zweite Spule 1103 vorteilhafterweise so gefertigt, dass sie den zur Verfügung stehenden Bauraum vollständig ausnutzt.

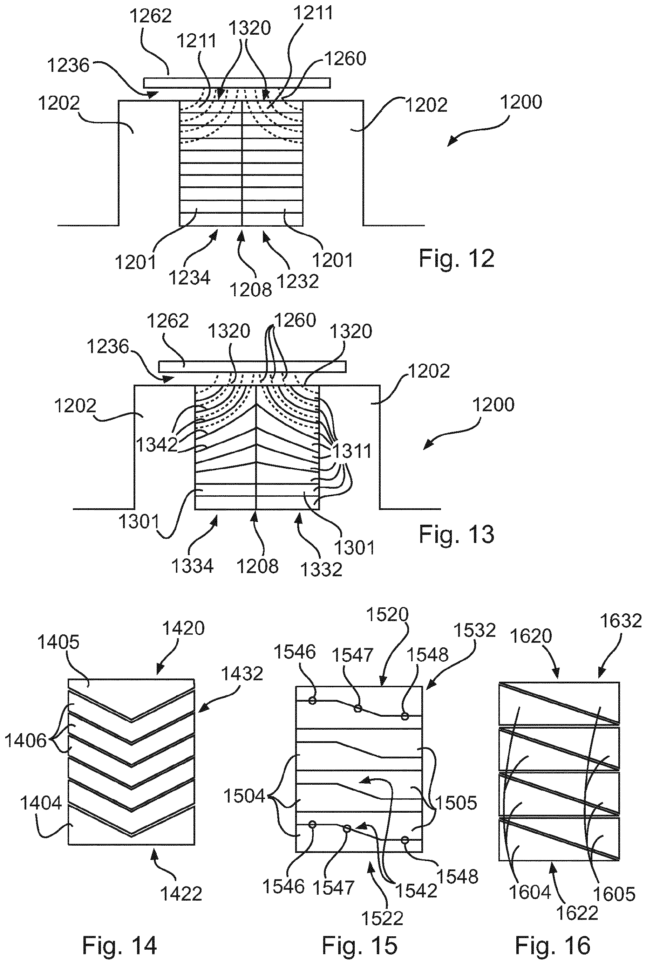

Fig. 12 veranschaulicht in einer Schnittansicht den Verlauf von Feldlinien 1260 insbesondere für eine Momentaufnahme. Dabei ist beispielhaft von einem Stator 1200 ein Ausschnitt, nämlich zwei Statorzähne 1202 gezeigt, auf die zwei gleiche Spulen 1201 aufgesteckt sind. Von den beiden Spulen 1201 ist jedoch jeweils nur ein erster bzw. zweiter Schenkel 1232 bzw. 1234 in einer Nut 1208 gezeigt, um nur die Zusammenhänge zu den magnetischen Feldlinien 1260 für diese eine Nut 1208 zu veranschaulichen. Alles zu dieser einen Nut 1208 gezeigte lässt sich im Grunde auf andere Nuten entsprechend übertragen.

Der Fig. 12 liegt der Gedanke zugrunde, dass sich relativ zu dem Stator 1200 ein Rotorpol 1262, oder anderer Magnet 1262, bewegt. In einer Momentaufnahme zeigt die Fig. 12 die Position des Rotorpols 1262 mittig zwischen zwei Statorzähnen 1202 und damit vis-à-vis der Nut 1208. Das Magnetfeld sucht sich möglichst einen Weg zu einem magnetischen Leiter, wie den Statorzähnen 1202. Dadurch entstehen diese etwa bogenförmig dargestellten Feldlinien 1260, die von dem Rotorpol 1262 zu jeweils einem der Statorzähne 1202 verlaufen. Der übrige Verlauf der Feldlinien 1260 ist in Fig. 12 nicht dargestellt, da es bei dieser Untersuchung nur auf den Verlauf innerhalb der Nut 1208 und damit innerhalb der dort eingebrachten Spulen 1201 ankommt.

Es ist zu erkennen, dass die Feldlinien 1260 insbesondere in die oberste Windung 1211 im Wesentlichen rechtwinklig eintreten. Die Windungen 1211 sind in Fig. 12, wie auch in den meisten anderen Figuren, im Schnitt dargestellt und sind dort als flächige, in die Zeichenebene verlaufende Elemente ausgebildet. Eine Änderung der Magnetfeldlinien 1260 in ihrer Stärke führt somit zu einem Wirbelstrom um diese Feldlinien 1260. Ein solcher Wirbelstrom kann sich dabei recht gut in diesen flächig und orthogonal zu den Feldlinien ausgebildeten Windungen 1211 ausbreiten und entsprechend zu Wirbelstromverlusten führen.

Als Lösung wird erfindungsgemäß vorgeschlagen, die Windungen möglichst an den Verlauf der Feldlinien anzupassen. Dies ist im Ausführungsbeispiel der Fig. 13 veranschaulicht. Fig. 13 verwendet dabei denselben Stator 1200 mit Statorzähnen 1202, wie in Fig. 12 gezeigt. Ebenfalls ist die Nut 1208 gleich und auch der Rotorpol 1262.

Zur Lösung werden aber geänderte Spulen 1301 vorgeschlagen, von denen in Fig. 13 auch nur jeweils ein erster bzw. zweiter Schenkel 1332 bzw. 1334 gezeigt ist. Diese Spule 1301 weist jeweils Windungen 1311 auf, die den magnetischen Feldlinien 1360 möglichst folgen. Dadurch entstehen unterschiedliche Windungen 1311, deren Form sich abhängig von ihrer Nähe zum Luftspalt 1236 ändern. Insbesondere sind sie von dem Zahn 1202 je stärker in Richtung auf den Luftspalt 1236 geneigt oder sogar in diese Richtung gekrümmt oder gebogen, je weiter sie zum Luftspalt 1236 hin angeordnet sind. Diese Neigung bzw. Ausrichtung der Windungen 1311 von dem jeweiligen Statorzahn 1202 zum Luftspalt 1236 wird auch insbesondere erkennbar durch eine entsprechende Neigung der Kontaktflächen 1342 von dem Kern, nämlich dem Statorzahn 1202 zur ersten Stirnseite 1320 hin. Die Windungen 1311 sind somit gemäß dem Ausführungsbeispiel, das in Fig. 13 erläutert ist, im Wesentlichen parallel zu den Magnetfeldlinien 1360 ausgebildet, so dass Wirbelströme, die im Wesentlichen quer zu dem Magnetfeld verlaufen würden, nicht oder schlechter auftreten können.

Somit wird zur Minimierung solcher Verluste, insbesondere Wirbelstromverluste, vorgeschlagen, die Freiheitsgerade der gießtechnischen Herstellung einer Spule zu nutzen, um die vom Magnetfeld durchsetzte Fläche des Leiters, nämlich die beispielhaft gezeigten Kontaktflächen 1342 bzw. entsprechende Windungen 1311 möglichst gering zu halten. Hierbei besteht das Ziel insbesondere auch in der Minimierung des Gesamtflusses durch den Leiter, also Minimierung des magnetischen Flusses durch den Leiter der betreffenden Spule.

Auch hier wird darauf hingewiesen, dass die Kontaktflächen 1342 sich auf einen mechanischen Kontakt, also das Aneinanderliegen der Windungen an diesen Kontaktflächen 1342 beziehen. Elektrisch sind die benachbarten Windungen 1311 an diesen Kontaktflächen 1342 aber gegeneinander isoliert.

Figuren 14 bis 16 veranschaulichen Möglichkeiten, die Leiterstabilität von gießtechnisch hergestellten Spulen zu erhöhen. Insbesondere zu diesen Vorschlägen gemäß den Figuren 14 bis 16 ist ausdrücklich zu wiederholen, dass dies nur drei Beispiele sind.

Die Figuren 14 bis 16 zeigen dabei in einer Schnittansicht lediglich einen Schenkel 1432, 1532 bzw. 1632. Der Schenkel 1432 der Fig. 14 weist dabei eine unterste Windung 1404, eine oberste Windung 1405 und Zwischenwindungen 1406 auf. Die unterste Windung 1404 beinhaltet dabei die zweite Stirnseite 1422 und die oberste Windung 1405 beinhaltet dabei die erste Stirnseite 1420. Die Zwischenwindungen 1406 sind etwa identisch im Querschnitt pfeilförmig ausgebildet und können dadurch, ähnlich eines Profilträgers, eine erhöhte Stabilität gegenüber bspw. flach ausgebildeten Windungen erreichen. Die unterste und oberste Windung 1404 bzw. 1405 sind so ausgebildet, dass sie einen Übergang zur zweiten bzw. erste Stirnseite 1422 bzw. 1420 schaffen. Die Flächeninhalte, also Größen der Querschnittsflächen aller Windungen 1404, 1405 und 1406 können so berechnet werden, dass sie alle die gleiche Größe aufweisen.

Fig. 15 zeigt eine weitere Geometrie, bei der im Querschnitt zwei unterschiedliche Windungen, nämlich die Windungen 1504 und die Windungen 1505 vorhanden sind. Diese Windungen 1504 und 1505 weisen zueinander Kontaktflächen 1542 auf, die aus mehreren, in unterschiedlichen Ebenen liegenden Kontaktflächenabschnitten, nämlich den Kontaktflächenabschnitten 1546, 1547 und 1548 zusammengesetzt sind. Nach außen hin, insbesondere zur ersten und zweiten Stirnseite 1520 bzw. 1522 können dennoch im Wesentlichen flache Seiten vorgesehen werden, die an die einzusetzende elektrische Einrichtung, insbesondere einzusetzende elektrische Maschine, wie bspw. an einen Nutgrund und ein Luftspalt, angepasst sind.

Fig. 16 zeigt eine Möglichkeit, bei der zwei unterschiedliche Windungen 1604 und 1605 vorgesehen sind, die im Querschnitt beide dreiecksförmig ausgebildet sind. Auch hierdurch kann gegenüber mit gleichem Flächenquerschnitt aber flach ausgebildeten Windungen eine erhöhte Stabilität erreicht werden. Außerdem wird hier gleichwohl eine vergleichsweise kompakte Form der Windungen erzielt. Auch dieser Vorschlag der dreiecksförmigen Windungsquerschnitte ermöglicht eine im Grunde flache Ausgestaltung der ersten und zweiten Stirnseite 1620 bzw. 1622.

Somit zeigen die Figuren 14 bis 16 drei Ansätze, mit denen die Leiterstabilität der Windungen deutlich erhöht werden kann. Diese Geometrievorschläge erhöhen die Biegesteifigkeit des Leiters, also der Windung in Längsrichtung, was zu einer erhöhten Stabilität sowohl von Spule als auch von dem Modell dafür führt.

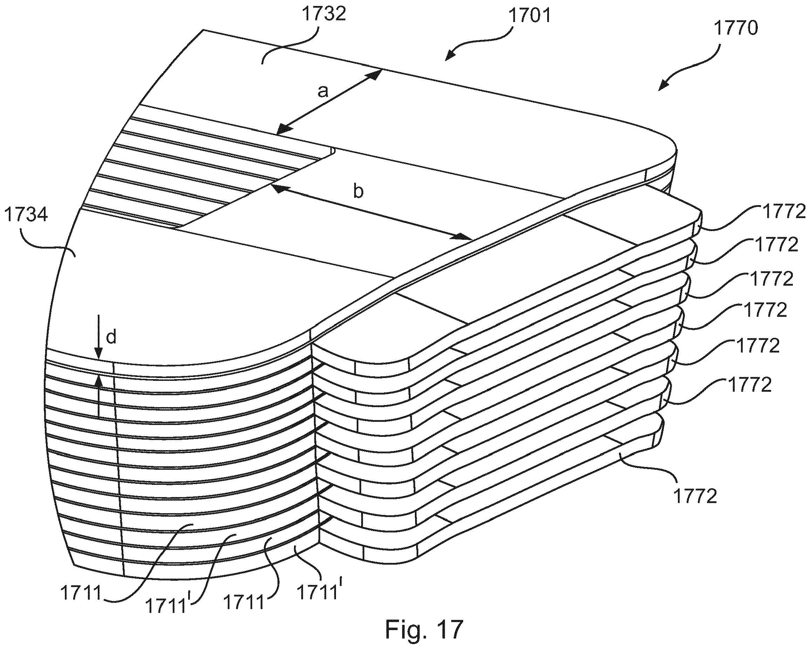

Fig. 17 zeigt einen Ausschnitt aus einer Spule 1701 in einer perspektivischen Ansicht auf einen Wicklungskopf 1770. Dieser Wicklungskopf 1770 verbindet den ersten Schenkel 1732 mit dem zweiten Schenkel 1734. Die gezeigte Spule 1701 weist eine Anzahl A Windungen 1711 bzw. 1711' auf. Von diesen A Windungen 1711 weisen halb so viele Windungen, nämlich mit der Anzahl B, auf, die hier in Abgrenzung mit dem Bezugszeichen 1711' bezeichnet werden, im Bereich des Wicklungskopfes 1770 eine Verbreiterung 1772 auf. Dadurch, dass sich B Windungen 1711 ohne Verbreiterung mit B Windungen 1711' mit Verbreiterung 1772 abwechseln, treten diese Verbreiterungen 1772 als Vorsprünge hervor. Diese B Verbreiterungen 1772 können somit wie Kühlrippen wirken.

In dem gezeigten Beispiel weisen alle Windungen 1711 und 1711' etwa die gleiche Dicke d auf. Eine Breite a im Bereich des ersten Schenkels 1732, die im Bereich des Schenkels 1734 den gleichen Wert aufweist, ist jedoch geringer als die Breite b im Bereich des Wicklungskopfes 1770. Die Breite b ist dort für eine Windung 1711 ohne Verbreiterung eingezeichnet. Es ist erkennbar, dass eine entsprechende Breite einer Windung 1711' im Bereich des Wicklungskopfes 1770 noch größer ist. Somit wird auch erkennbar, dass der Querschnitt, nämlich die Größe der Querschnittsfläche im Bereich des ersten Schenkels 1732 bzw. des zweiten Schenkels 1734 kleiner ist als im Bereich des Wicklungskopfes 1770. Somit wird außerdem erreicht, dass die Stromdichte im Bereich des Wicklungskopfes 1770 geringer ist als im Bereich des ersten bzw. des zweiten Schenkels 1732, 1734.

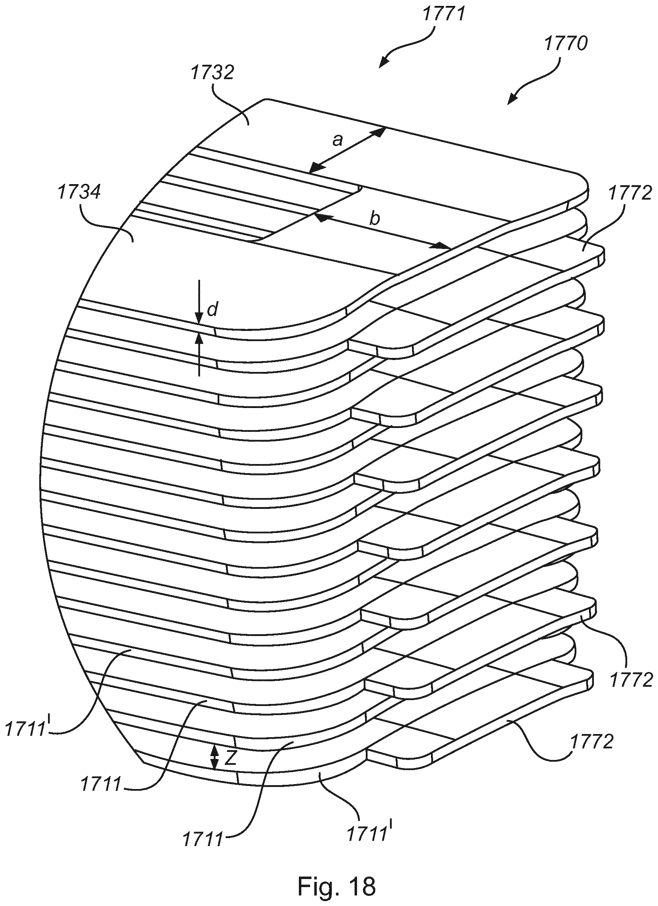

Zur Verdeutlichung der einzelnen Windungen 1711 bzw. 1711' dient auch die Figur 18, die die Spule 1701 in einem gestreckten Zustand zeigt. Dieser gestreckte Zustand ist erforderlich, damit sich Zwischenräume z zwischen Windungen 1711 bzw. 1711' ergeben, um das gießtechnische Herstellen dieser Spule 1701 zu ermöglichen. Ansonsten wird zur Erläuterung der einzelnen Elemente auf die Beschreibung zur Figur 17 verwiesen. Die Figur 17 zeigt dabei die Spule 1701 in einem nicht gestreckten Zustand, nämlich in dem Zustand, in dem die Spule 1701 Verwendung mit einer elektrischen Einrichtung wie einer elektrischen Schiene finden würde.

## Patentansprüche

1. Spule (601) für eine elektrische Einrichtung, insbesondere elektrische Maschine, zum Anordnen um wenigstens einen ein magnetisches Feld führenden ersten Kern (602) mit einer in Richtung des magnetischen Feldes verlaufenden Spulenlängsachse, wobei

   - die Spule (601) mehrere, aus einem elektrisch leitfähigen Spulenmaterial gegossene Windungen (611) aufweist und
   - die Windungen (611) und/oder deren Windungsabschnitte abhängig ihrer Position in Spulenlängsrichtung (L) Querschnittsflächen ($A_1$-$A_5$) unterschiedlicher Größen und/oder unterschiedlicher Formen aufweisen, wobei
   - die Spule (601) zur Verwendung in der elektrischen Einrichtung, insbesondere in der elektrischen Maschine vorbereitet ist,
   - die Spule (601) wenigstens eine erste Stirnseite (620) aufweist,
   - die Spule (601) wenigstens eine zweite Stirnseite (622) aufweist,
   - wobei die Spulenlängsrichtung im Wesentlichen zwischen der ersten und der zweiten Stirnseite (620, 622) verläuft, und

      - die Spule (601) zwei, jeweils zwischen dem ersten Kern (602) und einem weiteren Kern (602) anzuordnende Schenkel (132 134) aufweist mit einer zum ersten Kern weisenden Innenfläche und einer zum jeweils weiteren Kern (602) weisenden Außenfläche (438),

**dadurch gekennzeichnet, dass**

isolierte Kontaktflächen (1342) in Spulenlängsrichtung (L) benachbarter Windungen (1311)

- um so stärker in Richtung vom Kern (1202) zur ersten Stirnseite (1320) hin geneigt bzw. ausgerichtet sind, je weiter sie von der zweiten zur ersten Stirnseite (1322, 1320) hin angeordnet sind und/oder
- um so stärker gebogen sind, je weiter sie von der zweiten zur ersten Stirnseite (1322, 1320) hin angeordnet sind.

2. Spule (601) nach Anspruch 1,
   **dadurch gekennzeichnet, dass**

   - die elektrische Einrichtung eine eine Drehachse aufweisenden Rotationsmaschine ist,
   - die Spulenlängsrichtung (L) bestimmungsgemäß in radialer Richtung zur Drehachse verläuft,
   - ein Luftspalt (136) zwischen stehendem und drehendem Teil ausgebildet ist,
   - die erste Stirnseite (620) zum Anordnen zum Luftspalt (136) hin vorbereitet ist, und
   - die zweite Stirnseite (622) zum zum Luftspalt (136) abgewandten Anordnen vorbereitet ist.

3. Spule (601) nach Anspruch 1 oder 2,
   **dadurch gekennzeichnet, dass**
   die Querschnittsfläche ($A_1$-$A_5$) der Windungen (611) der Spule (601) von der zweiten Stirnseite (622) zur ersten Stirnseite (620) hin zunimmt.

4. Spule (601) nach einem der Ansprüche 1 bis 3,
   **dadurch gekennzeichnet, dass**
   zur bestimmungsgemäßen Anordnung der Spule (601) in der elektrischen Einrichtung die erste Stirnseite (620) zum Anordnen in einem ersten Bereich der elektrischen Einrichtung vorgesehen ist, und die zweite Stirnseite (622) zum Anordnen in einem zweiten Bereich der elektrischen Einrichtung vorgesehen ist und die Spule (601) im Bereich ihrer zweiten Stirnseite (622) eingerichtet ist, stärker gekühlt zu werden als im Bereich ihrer ersten Stirnseite (620).

5. Spule (601) nach einem der vorstehenden Ansprüche,
   **dadurch gekennzeichnet, dass**
   sich die Querschnittsflächen ($A_1$-$A_5$) wenigstens einer Windung (611), vorzugsweise jeder Windung (611) abhängig von ihrer Position, in Längsrichtung (L) der jeweiligen Windung (611) verändern, insbesondere in ihrer Form und/oder Größe.

6. Spule (601) nach einem der vorstehenden Ansprüche,
   **dadurch gekennzeichnet, dass**
   wenigstens eine Windung (611) im Bereich wenigstens eines Wicklungskopfes, der jeweils einen Übergangsbereich zwischen den beiden Schenkeln (132, 134) kennzeichnet, einen anderen Querschnitt aufweist als im Bereich der Schenkel (132, 134).

7. Spule (601) nach einem der vorstehenden Ansprüche,
   **dadurch gekennzeichnet, dass**
   sich wenigstens zwei benachbarte Windungen (611) im Bereich des wenigstens einen Wicklungskopfes in ihrer Geometrie, insbesondere in ihrem Querschnitt, so unterscheiden, dass die Spule (601) im Bereich des Wicklungskopfes an einer dem Kern abgewandten Seite einen Vorsprung ausbildet und/oder dass wenigstens zwei benachbarte Windungen (611) im Bereich des Wicklungskopfes so ausgestaltet sind, dass sie wenigstens eine Kühlrippe ausbilden.

8. Spule (601) nach einem der vorstehenden Ansprüche,
   **dadurch gekennzeichnet, dass**
   die Windungen (611) in Spulenlängsrichtung (L) wenigstens zwei, insbesondere wenigstens drei unterschiedliche Querschnittsgeometrien aufweisen.

9. Spule (901) nach einem der vorstehenden Ansprüche,
   **dadurch gekennzeichnet, dass**

   - in einem ersten Spulenschenkel (932) wenigstens eine Windung (911) eine zu einer in Spulenlängsrichtung (L) benachbarten Windung (911) weisende erste Nachbaroberfläche (942) aufweist, die insbesondere als elektrisch isolierte Kontaktfläche (942) ausgebildet ist und
   - in einem zweiten Spulenschenkel (934) wenigstens eine Windung (911) eine zu einer in Spulenlängsrichtung (L) benachbarten Windung (911) weisende zweite Nachbaroberfläche (944) aufweist, die insbesondere als elektrisch isolierte Kontaktfläche (944) ausgebildet ist, und

   die erste und zweite Nachbaroberfläche (942, 944) zueinander parallel verlaufen, insbesondere in derselben Ebene verlaufen.

10. Spule (1001) nach einem der Ansprüche 3 bis 9,
    **dadurch gekennzeichnet, dass**
    die Innenfläche (1139) und die Außenfläche (1137) jedes der beiden Schenkel in radialer Richtung von der Maschineninnenseite zur Maschinenaußenseite auseinander laufen, wobei die Spule (1001) insbesondere für einen Stator (1000) einer Innenläufermaschine vorgesehen ist.

11. Spule (1001) nach Anspruch 10,
**dadurch gekennzeichnet, dass**
die Dicke einer Windung (1111) je kleiner ist, desto weiter die Windung (1111) in radialer Richtung von der Maschineninnenseite zur Maschinenaußenseite hin angeordnet ist.

12. Spule (1301) nach Anspruch 11,
**dadurch gekennzeichnet, dass**

- die erste Stirnseite (1320) zum Anordnen benachbart zu wenigstens einem Luftspalt vorbereitet ist,
- die erste Stirnseite (1320) zum Anordnen benachbart zu wenigstens einem, ein Magnetfeld führenden, relativ zu der Spule (1301) zu bewegenden Pol (1262) vorbereitet ist,
- die Spule (1301) zum Anordnen in einem Rotor einer elektrischen Rotationsmaschine vorbereitet ist und die erste Stirnfläche (1320) zu einem Stator weist und/oder
- die Spule (1301) zum Anordnen in einem Stator (1200) einer elektrischen Rotationsmaschine vorbereitet ist und die erste Stirnfläche (1320) zu einem Rotor weist.

13. Spulenanordnung (1101, 1103) für eine elektrische Maschine, wobei die Spulenanordnung (1101, 1103) wenigstens eine erste Spule nach einem der vorhergehenden Ansprüche und eine zweite Spule (1101, 1103) zum Anordnen jeweils um einen ein magnetisches Feld führenden Kern (1002) der elektrischen Maschine umfasst, wobei

- jede Spule (1101, 1103) eine in Richtung des magnetischen Feldes verlaufende Spulenlängsachse (L) aufweist,
- jede der Spulen (1101, 1103) mehrere, aus einem elektrisch leitfähigen Spulenmaterial gegossene Windungen aufweist,
- jede Spule (1101, 1103) jeweils zwei, jeweils zwischen zwei benachbarten Kernen (1002) anzuordnende Schenkel aufweist und
- die Windungen der ersten Spule (1101) im Vergleich zu den Windungen der zweiten Spule (1103) unterschiedliche Querschnitte aufweisen und/oder
- die Schenkel der ersten Spule (1101) im Vergleich zur zweiten Spule (1103) unterschiedliche Querschnitte aufweisen bei einem Schnitt entlang einer durch die Längsachsen der beiden Spulen aufgespannten Schnittfläche.

14. Spulenanordnung (1101, 1103) nach Anspruch 13,
**dadurch gekennzeichnet, dass**
sich die Schenkel der ersten Spule (1101) radial nach außen verbreitern, bezogen auf eine Anordnung in einer elektrischen Rotationsmaschine, und sich die Schenkel der zweiten Spule (1103) radial nach außen nicht verbreitern, bezogen auf eine Anordnung in der elektrischen Rotationsmaschine.

15. Elektrische Maschine, insbesondere Rotationsmotor und/oder -generator, mit wenigstens einer Spule (601) nach einem der Ansprüche 1 bis 12 und/oder mit wenigstens einer Spulenanordnung (1101, 1103) nach einem der Ansprüche 13 oder 14.

16. Modellform zum Herstellen eines Spulenmodells zum Herstellen einer Gießform zum gießtechnischen Herstellen einer Spule (601) nach einem der Ansprüche 1 bis 12 und/oder zum Herstellen der ersten oder zweiten Spule einer Spulenanordnung nach einem der Ansprüche 13 oder 14.

17. Gießform zum gießtechnischen Herstellen einer Spule (601) nach einem der Ansprüche 1 bis 12 und/oder zum Herstellen der ersten oder zweiten Spule einer Spulenanordnung nach einem der Ansprüche 13 oder 14.

18. Verfahren zum Herstellen wenigstens einer, mehrere Windungen und wenigstens zwei Schenkel aufweisenden Spule (601) nach einem der Ansprüche 1 bis 12 für eine elektrische Maschine, umfassend die Schritte,

- Festlegen der Größe wenigstens eines Wickelraumes zum Anordnen eines der Schenkel (132, 134) der Spule (601),
- Bestimmen eines individuellen Windungsquerschnitts ($A_1$-$A_5$) für unterschiedliche Windungen (611), insbesondere für jede einzelne Windung (611) und
- Gießen der Spule (601) mit individuellen Windungsquerschnitten.

19. Verfahren nach Anspruch 18,
**dadurch gekennzeichnet, dass**
die individuellen Windungsquerschnittsflächen ($A_1$-$A_5$) bestimmt werden abhängig von

- einer über den Wickelraum verteilten, ortsabhängigen Kühlleistung,
- einer Entfernung der jeweiligen Windung (611) und/oder eines jeweiligen Windungsabschnitts von einer Wärmesenke,
- einer Entformbarkeit der Spule (601) aus einer Gießform und/oder einer Entformbarkeit eines Spulenmodells aus einer Modellform,
- im Betrieb der Maschine zu erwartenden Wirbelströmen, insbesondere verursacht durch Streufelder und/oder Stromverdrängungen verursacht durch beispielsweise jeweils benachbarte Windungen oder Pole,
- einem Einsetzvorgang zum Einsetzen der herzustellenden Spule und wenigstens einer weiteren Spule in die herzustellende Maschine, bei dem sich ein Schenkel (132, 134) der herzustellenden Spule (601) und ein Schenkel (134, 132) der weiteren Spule (601) einen Wickelraum zwischen zwei Kernen (602), Pole bzw. Zähnen teilen, und/oder
- einer gewünschten Steifigkeit der herzustellenden Spule und/oder einer gewünschten Steifigkeit eines Spulenmodells zum Fertigen einer Form für die herzustellende Spule.

**Claims**

1. A coil (601) for an electrical device, in particular electric machine, for arranging around at least a first core (602) which conducts a magnetic field with a longitudinal coil axis running in the direction of the magnetic field, wherein

- the coil (601) has a plurality of turns (611) cast from an electrically conductive coil material, and
- the turns (611) and/or the turn portions thereof, dependent on their position in the longitudinal coil direction (L), have cross-sectional areas ($A_1$-$A_5$) of different sizes and/or different shapes, wherein
- the coil (601) is prepared for use in the electrical device, in particular in the electric machine,
- the coil (601) has at least a first end face (620),
- the coil (601) has at least a second end face (622),
- wherein the longitudinal coil direction runs substantially between the first and the second end face (620, 622), and
- the coil (601) has two sides (132, 134), to be arranged in each case between the first core (602) and a further core (602), with an inner face pointing towards the first core and an outer face (438) pointing to the in each case further core (602),

**characterised in that**
isolated contact faces (1342) in the longitudinal coil direction (L) of adjacent turns (1311)

- are more greatly inclined or oriented in the direction from the core (1202) towards the first end face (1320), the further they are arranged from the second towards the first end face (1322, 1320), and/or
- are more greatly bent, the further they are arranged from the second towards the first end face (1322, 1320).

2. A coil (601) according to Claim 1,
   **characterised in that**

   - the electrical device is a rotary machine having an axis of rotation,
   - the longitudinal coil direction (L) as prescribed runs in the radial direction to the axis of rotation,
   - an air gap (136) is formed between the stationary and the rotary part,
   - the first end face (620) is prepared for arranging towards the air gap (136), and
   - the second end face (622) is prepared for arranging facing away from the air gap (136).

3. A coil (601) according to Claim 1 or 2,
   **characterised in that**
   the cross-sectional area ($A_1$-$A_5$) of the turns (611) of the coil (601) increases from the second end face (622) towards the first end face (620).

4. A coil (601) according to one of Claims 1 to 3,
   **characterised in that**
   to arrange the coil (601) in the electrical device as prescribed, the first end face (620) is provided for arranging in a first region of the electrical device, and the second end face (622) is provided for arranging in a second region of the electrical device, and the coil (601) in the region of its second end face (622) is set up to be cooled more greatly than in the region of its first end face (620).

5. A coil (601) according to one of the preceding claims,
   **characterised in that**
   the cross-sectional areas ($A_1$-$A_5$) of at least one turn (611), preferably of each turn (611) dependent on its position, change in the longitudinal direction (L) of the respective turn (611), in particular in their shape and/or size.

6. A coil (601) according to one of the preceding claims,
   **characterised in that**
   at least one turn (611), in the region of at least one winding overhang which in each case marks a transitional region between the two sides (132, 134), has a different cross-section than in the region of the sides (132, 134).

7. A coil (601) according to one of the preceding claims,
   **characterised in that**
   at least two adjacent turns (611) in the region of the at least one winding overhang differ in their geometry, in particular in their cross-section, such that the coil (601) in the region of the winding overhang forms a projection on a side facing away from the core, and/or that at least two adjacent turns (611) in the region of the winding overhang are configured such that they form at least one cooling fin.

8. A coil (601) according to one of the preceding claims, **characterised in that**
the turns (611) in the longitudinal coil direction (L) have at least two, in particular at least three, different cross-sectional geometries.

9. A coil (901) according to one of the preceding claims, **characterised in that**

- in a first coil side (932) at least one turn (911) has a first neighbouring surface (942) pointing to a turn (911) which is adjacent in the longitudinal coil direction (L), which surface is formed in particular as an electrically insulated contact face (942), and
- in a second coil side (934) at least one turn (911) has a second neighbouring surface (944) pointing to a turn (911) which is adjacent in the longitudinal coil direction (L), which surface is formed in particular as an electrically insulated contact face (944), and

the first and second neighbouring surface (942, 944) run parallel to each other, in particular run in the same plane.

10. A coil (1001) according to one of Claims 3 to 9, **characterised in that**
the inner face (1139) and the outer face (1137) of each of the two sides diverge in the radial direction from the inside of the machine to the outside of the machine, the coil (1001) being provided in particular for a stator (1000) of an internal-rotor machine.

11. A coil (1001) according to Claim 10, **characterised in that**
the thickness of a turn (1111) is smaller, the farther the turn (1111) is arranged in the radial direction from the inside of the machine towards the outside of the machine.

12. A coil (1301) according to Claim 11, **characterised in that**

- the first end face (1320) is prepared for arranging adjacent to at least one air gap,
- the first end face (1320) is prepared for arranging adjacent to at least one pole (1262) which conducts a magnetic field and is to be moved relative to the coil (1301),
- the coil (1301) is prepared for arranging in a rotor of an electric rotary machine and the first end face (1320) points to a stator, and/or
- the coil (1301) is prepared for arranging in a stator (1200) of an electric rotary machine and the first end face (1320) points to a rotor.

13. A coil assembly (1101, 1103) for an electric machine, wherein the coil assembly (1101, 1103) has at least a first coil according to one of the preceding claims and a second coil (1101, 1103) for arranging in each case around a core (1002) of the electric machine which conducts a magnetic field, wherein

- each coil (1101, 1103) has a longitudinal coil axis (L) running in the direction of the magnetic field,
- each of the coils (1101, 1103) has a plurality of turns cast from an electrically conductive coil material,
- each coil (1101, 1103) has in each case two sides to be arranged in each case between two adjacent cores (1002), and
- the turns of the first coil (1101) have different cross-sections compared with the turns of the second coil (1103), and/or
- the sides of the first coil (1101) compared with the second coil (1103) have different cross-sections when cut along a cutting plane spanned by the longitudinal axes of the two coils.

14. A coil assembly (1101, 1103) according to Claim 13, **characterised in that**
the sides of the first coil (1101) widen radially outwards, relative to an arrangement in an electric rotary machine, and the sides of the second coil (1103) do not widen radially outwards, relative to an arrangement in the electric rotary machine.

15. An electric machine, in particular rotary motor and/or rotary generator, with at least one coil (601) according to one of Claims 1 to 12 and/or with at least one coil assembly (1101, 1103) according to one of Claims 13 or 14.

16. A model mould for producing a coil model for producing a casting mould for manufacturing a coil (601) according to one of Claims 1 to 12 by casting and/or for producing the first or second coil of a coil assembly according to one of Claims 13 or 14.

17. A casting mould for producing a coil (601) according to one of Claims 1 to 12 by casting and/or for producing the first or second coil of a coil assembly according to one of Claims 13 or 14.

18. A method for producing at least one coil (601), having a plurality of turns and at least two sides, according to one of Claims 1 to 12 for an electric machine, comprising the steps:

- defining the size of at least one winding space for arranging one of the sides (132, 134) of the coil (601),

- determining an individual turn cross-section ($A_1$-$A_5$) for different turns (611), in particular for each individual turn (611), and

- casting the coil (601) with individual turn cross-sections.

**19.** A method according to Claim 18,
**characterised in that**
the individual turn cross-sectional areas ($A_1$-$A_5$) are determined dependent on

- a location-dependent cooling capacity distributed across the winding space,

- a distance of the respective turn (611) and/or of a respective turn portion from a heat sink,

- a mould-release ability of the coil (601) from a casting mould and/or a mould-release ability of a coil model from a model form,

- eddy currents to be expected during operation of the machine, in particular caused by leakage fields and/or current displacements caused by turns or poles which are for example adjacent in each case,

- an insertion operation for inserting the coil to be produced and at least one further coil into the machine to be produced, in which one side (132, 134) of the coil (601) which is to be produced and one side (134, 132) of the further coil (601) divide a winding space between two cores (602), poles or teeth, and/or

- a desired rigidity of the coil which is to be produced and/or a desired rigidity of a coil model for manufacturing a mould for the coil which is to be produced.

**Revendications**

**1.** Bobine (601) pour un dispositif électrique, en particulier une machine électrique, destinée à être disposée autour d'au moins un premier noyau (602) acheminant un champ magnétique avec un axe longitudinal de bobine s'étendant en direction du champ magnétique, dans laquelle

- la bobine (601) présente plusieurs spires (611) coulées à partir d'un matériau de bobine conducteur électriquement et

- les spires (611) et/ou leurs sections de spire présentent en fonction de leur position dans le sens longitudinal de bobine (L) des surfaces de section transversale ($A_1$ - $A_5$) de tailles différentes et/ou de formes différentes, dans laquelle

- la bobine (601) est préparée pour être utilisée dans le dispositif électrique, en particulier dans la machine électrique,

- la bobine (601) présente au moins un premier côté frontal (620),

- la bobine (601) présente au moins un deuxième côté frontal (622),

- dans laquelle le sens longitudinal de bobine s'étend sensiblement entre le premier et le deuxième côté frontal (620, 622), et

- la bobine (601) présente deux branches (132 134) à disposer respectivement entre le premier noyau (602) et un autre noyau (602), avec une face intérieure pointant vers le premier noyau et une face extérieure (438) pointant vers l'autre noyau (602) respectif,

**caractérisée en ce que**
des faces de contact (1342) isolées dans le sens longitudinal de bobine (L) de spires (1311) adjacentes

- sont d'autant plus inclinées ou orientées dans la direction depuis le noyau (1202) jusqu'au premier côté frontal (1320) qu'elles sont davantage disposées du deuxième vers le premier côté frontal (1322, 1320) et/ou

- sont d'autant plus courbées qu'elles sont davantage disposées du deuxième vers le premier côté frontal (1322, 1320).

**2.** Bobine (601) selon la revendication 1,
**caractérisée en ce que**

- le dispositif électrique est une machine rotative présentant un axe de rotation,

- le sens longitudinal de bobine (L) s'étend conformément à l'usage prévu en direction radiale par rapport à l'axe de rotation,

- un entrefer (136) est réalisé entre des parties immobile et rotative,

- le premier côté frontal (620) est préparé pour être disposé en direction de l'entrefer (136) et

- le deuxième côté frontal (622) est préparé pour être disposé de manière opposée par rapport à l'entrefer (136) .

**3.** Bobine (601) selon la revendication 1 ou 2,
**caractérisée en ce que**
la surface de section transversale ($A_1$ - $A_5$) des spires (611) de la bobine (601) augmente depuis le deuxième côté frontal (622) jusqu'au premier côté frontal (620).

**4.** Bobine (601) selon l'une quelconque des revendications 1 à 3,
**caractérisée en ce que**
pour disposer conformément à l'usage prévu la bobine (601) dans le dispositif électrique, le premier côté frontal (620) est prévu pour être disposé dans une première zone du dispositif électrique et le deuxième côté frontal (622) est prévu pour être disposé dans une deuxième zone du dispositif électrique, et la bobine (601) dans la zone de son deuxième côté frontal (622) est mise au point pour être refroidie plus fortement que dans la zone de son premier côté frontal (620).

5. Bobine (601) selon l'une quelconque des revendications précédentes,
**caractérisée en ce que**
les faces de section transversale ($A_1$ - $A_5$) d'au moins une spire (611), de préférence de chaque spire (611), varient, en particulier dans leur forme et/ou leur dimension, en fonction de leur position, dans le sens longitudinal (L) de la spire (611) respective.

6. Bobine (601) selon l'une quelconque des revendications précédentes,
**caractérisée en ce que**
au moins une spire (611) présente dans la zone d'au moins une tête d'enroulement, qui caractérise respectivement une zone de transition entre les deux branches (132, 134), une autre section transversale que dans la zone des branches (132, 134).

7. Bobine (601) selon l'une quelconque des revendications précédentes,
**caractérisée en ce que**
au moins deux spires (611) adjacentes se distinguent dans la zone de l'au moins une tête d'enroulement dans leur géométrie, en particulier dans leur section transversale, de sorte que la bobine (601) réalise dans la zone de la tête d'enroulement au niveau du côté opposé au noyau une partie faisant saillie, et/ou qu'au moins deux spires (611) adjacentes sont configurées dans la zone de la tête d'enroulement de telle sorte qu'elles réalisent au moins une nervure de refroidissement.

8. Bobine (601) selon l'une quelconque des revendications précédentes,
**caractérisée en ce que**
les spires (611) présentent dans le sens longitudinal de bobine (L) au moins deux, en particulier au moins trois, géométries de section transversale différentes.

9. Bobine (901) selon l'une quelconque des revendications précédentes,
**caractérisée en ce que**

- dans une première branche de bobine (932), au moins une spire (911) présente une première surface voisine (942) pointant vers une spire (911) adjacente dans le sens longitudinal de bobine (L), qui est réalisée en particulier sous la forme d'une face de contact (942) électriquement isolée, et
- dans une deuxième branche de bobine (934), au moins une spire (911) présente une deuxième surface voisine (944) pointant vers une spire (911) adjacente dans le sens longitudinal de bobine (L), qui est réalisée en particulier sous la forme d'une face de contact (944) électriquement isolée, et

la première et la deuxième surface voisine (942, 944) s'étendent de manière parallèle l'une par rapport à l'autre, en particulier s'étendent dans le même plan.

10. Bobine (1001) selon l'une quelconque des revendications 3 à 9,
**caractérisée en ce que**
la face intérieure (1139) et la face extérieure (1137) de chacune des deux branches s'écartent dans le sens radial depuis le côté intérieur de machine jusqu'au côté extérieur de machine, dans laquelle la bobine (1001) est prévue en particulier pour un stator (1000) d'une machine à induit intérieur.

11. Bobine (1001) selon la revendication 10,
**caractérisée en ce que**
l'épaisseur d'une spire (1111) est d'autant plus petite que la spire (1111) est disposée dans le sens radial davantage du côté intérieur de machine vers le côté extérieur de machine.

12. Bobine (1301) selon la revendication 11,
**caractérisée en ce que**

- le premier côté frontal (1320) est préparé pour être disposé de manière adjacente par rapport à au moins un entrefer,
- le premier côté frontal (1320) est préparé pour être disposé de manière adjacente par rapport à au moins un pôle (1262) acheminant un champ magnétique, à déplacer par rapport à la bobine (1301),
- la bobine (1301) est préparée pour être disposée dans un rotor d'une machine rotative électrique et la première face frontale (1320) pointe vers un stator et/ou
- la bobine (1301) est préparée pour être disposée dans un stator (1200) d'une machine rotative électrique et la première face frontale (1320) pointe vers un rotor.

13. Ensemble de bobines (1101, 1103) pour une machine électrique, dans lequel l'ensemble de bobines (1101, 1103) comprend au moins une première bobine selon l'une quelconque des revendications précédentes et une deuxième bobine (1101, 1103) destinée à être disposée respectivement autour d'un noyau (1002), acheminant un champ magnétique, de la machine électrique, dans lequel

- chaque bobine (1101, 1103) présente un axe longitudinal de bobine (L) s'étendant en direction du champ magnétique,
- chacune des bobines (1101, 1103) présente plusieurs spires coulées à partir d'un matériau de bobine conducteur électriquement,
- chaque bobine (1101, 1103) présente respectivement deux branches à disposer respectivement entre deux noyaux (1002) adjacents, et
- les spires de la première bobine (1101) présentent, en comparaison avec les spires de la deuxième bobine (1103), des sections transversales différentes, et/ou
- les branches de la première bobine (1101) présentent, en comparaison avec la deuxième bobine (1103), des sections transversales différentes pour une coupe le long d'une face de coupe formée par les axes longitudinaux des deux bobines.

14. Ensemble de bobines (1101, 1103) selon la revendication 13,
**caractérisé en ce que**
les branches de la première bobine (1101) s'élargissent radialement vers l'extérieur par rapport à une disposition dans une machine rotative électrique, et les branches de la deuxième bobine (1103) ne s'élargissent pas radialement vers l'extérieur par rapport à une disposition dans la machine rotative électrique.

15. Machine électrique, en particulier moteur et/ou générateur de rotation, avec au moins une bobine (601) selon l'une quelconque des revendications 1 à 12 et/ou avec au moins un ensemble de bobines (1101, 1103) selon l'une quelconque des revendications 13 ou 14.

16. Moule de modèle servant à fabriquer un modèle de bobine servant à fabriquer un moule de coulée servant à fabriquer selon une technique de coulée une bobine (601) selon l'une quelconque des revendications 1 à 12 et/ou servant à fabriquer la première ou la deuxième bobine d'un ensemble de bobines selon l'une quelconque des revendications 13 ou 14.

17. Moule de coulée servant à fabriquer selon une technique de coulée une bobine (601) selon l'une quelconque des revendications 1 à 12 et/ou servant à fabriquer la première ou la deuxième bobine d'un ensemble de bobines selon l'une quelconque des revendications 13 ou 14.

18. Procédé servant à fabriquer au moins une bobine (601) présentant plusieurs spires et au moins deux branches selon l'une quelconque des revendications 1 à 12 pour une machine électrique, comprenant les étapes

- de fixation de la dimension d'au moins un espace d'enroulement servant à disposer une des branches (132, 134) de la bobine (601),
- de définition d'une section transversale de spire ($A_1$ - $A_5$) individuelle pour différentes spires (611), en particulier pour chaque spire (611) individuelle, et
- de coulée de la bobine (601) avec des sections transversales de spire individuelles.

19. Procédé selon la revendication 18,
**caractérisé en ce que**
les faces de section transversale de spire ($A_1$ - $A_5$) individuelles sont définies en fonction

- d'une puissance de refroidissement répartie sur l'espace d'enroulement, dépendant de l'emplacement,
- d'un éloignement de la spire (611) respective et/ou d'une section de spire respective d'un dissipateur thermique,
- d'une aptitude à être démoulée de la bobine (601) hors d'un moule de coulée et/ou d'une aptitude à être démoulé d'un modèle de bobine hors d'un moule de modèle,
- de courants de Foucault attendus lors du fonctionnement de la machine, en particulier provoqués par des champs de diffusion et/ou des refoulements de courant provoqués par exemple par des spires ou des pôles respectivement adjacents,
- d'une opération d'insertion servant à insérer la bobine à fabriquer et au moins une autre bobine dans la machine à fabriquer, où une branche (132, 134) de la bobine (601) à fabriquer et une branche (134, 132) de l'autre bobine (601) divisent un espace d'enroulement entre deux noyaux (602), des pôles ou des dents, et/ou
- d'une rigidité souhaitée de la bobine à fabriquer et/ou d'une rigidité souhaitée d'un modèle de bobine servant à produire un moule pour la bobine à fabriquer.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010020897 A1
- DE 10352814 A1
- DE 4122076 A1
- DE 102004024392 A1

**In der Beschreibung aufgeführte Nicht-Patentliteratur**

- Casting production of coils for electrical machines. **M. GRÖNINGER ; A. KOCK et al.** Electric Drives Production Conference (EDPC), 2011. First International IEEE, 2011, 159-161
- **A. BOGLIETTI.** Evolution and Modern Approaches for Thermal Analyses of Electrical Machines. *IEEE Transactions on Industrial Electronics,* 2009
- **G. MÜLLER ; B. PONICK.** Elektrische Maschinen, 2: Berechnung elektrischer Maschinen. Wiley-VCH Verlag GmbH & Co. KGaA, 2009, 385 ff
- **PILLE, CHRISTOPH ; HORCH, FELIX.** *Von der Idee zum gießtechnisch umgesetzten Produkt in Fraunhofer IFAM,* 2011, 1, , 19-27, 33
- **GRÖNINGER, M.** Casting production of coils for electrical machines: in: Electric Drives Production Conference (EDPC). First International IEEE, 2011, 159-161